# EUROPEAN PATENT SPECIFICATION

(11) **EP 4 411 641 B1**
(45) Date of publication and mention of the grant of the patent: **20.05.2026**
(21) Application number: 23777620.8
(22) Date of filing: 31.01.2023
(51) Int. Cl.: G06T 7/73, G06T 7/70, G06F 18/00, G06V 10/82, G06V 40/10

(54) **DATA PROCESSING METHOD AND APPARATUS, DEVICE AND MEDIUM**
DATENVERARBEITUNGSVERFAHREN UND -VORRICHTUNG, VORRICHTUNG UND MEDIUM
PROCÉDÉ ET APPAREIL DE TRAITEMENT DE DONNÉES, DISPOSITIF ET SUPPORT

(30) Priority: 31.03.2022 CN 202210332763
(43) Date of publication of application: 07.08.2024
(73) Proprietor: Tencent Technology (Shenzhen) Company Limited, Shenzhen, Guangdong, 518057 (CN)
(72) Inventor: ZHANG, Liang, Shenzhen, Guangdong 518057 (CN); MA, Minglang, Shenzhen, Guangdong 518057 (CN); XU, Zhan, Shenzhen, Guangdong 518057 (CN)
(74) Representative: Nederlandsch Octrooibureau
(86) International application number: PCT/CN2023/073976
(87) International publication number: WO 2023/185241

(56) References cited:
- WO-A1-2021/097750
- CN-A- 109 359 568
- CN-A- 110 139 115
- CN-A- 111 414 797
- CN-A- 113 449 696
- US-A1- 2007 268 295
- MEHTA DUSHYANT ET AL: "XNect", ACM TRANSACTIONS ON GRAPHICS, ACM, NY, US, vol. 39, no. 4, 8 July 2020 (2020-07-08), pages 82:1 - 82:17, XP059023211, ISSN: 0730-0301, DOI: 10.1145/3386569.3392410
- PAVLAKOS GEORGIOS ET AL: "Expressive Body Capture: 3D Hands, Face, and Body From a Single Image", 2019 IEEE/CVF CONFERENCE ON COMPUTER VISION AND PATTERN RECOGNITION (CVPR), IEEE, 15 June 2019 (2019-06-15), pages 10967 - 10977, XP033686409, DOI: 10.1109/CVPR.2019.01123
- CAO ZHE ET AL: "OpenPose: Realtime Multi-Person 2D Pose Estimation Using Part Affinity Fields", IEEE TRANSACTIONS ON PATTERN ANALYSIS AND MACHINE INTELLIGENCE, IEEE COMPUTER SOCIETY, USA, vol. 43, no. 1, 17 July 2019 (2019-07-17), pages 172 - 186, XP011824613, ISSN: 0162-8828, [retrieved on 20201203], DOI: 10.1109/TPAMI.2019.2929257
- "Master's Thesis Xi'an University of Electronic Science and Technology", 15 March 2022, XI'AN UNIVERSITY OF ELECTRONIC SCIENCE AND TECHNOLOGY, CN, article SHI, XUEYONG: "Research on Human Fall Behavior Analysis Technologies Based on Machine Learning", pages: 1 - 72, XP009549545, DOI: 10.27251/d.cnki.gnjdc.2021.000920
- MENGHE LI, XU HONG-JI, SHI LEI-XIN, ZHAO WEN-JIE, LI JUAN: "Multi-person Activity Recognition Based on Bone Keypoints Detection", COMPUTER SCIENCE, vol. 48, no. 4, 30 April 2021 (2021-04-30), pages 138 - 143, XP093097845, DOI: 10.11896/jsjkx.200300042
- VYAS KATHAN; MA RUI; REZAEI BEHNAZ; LIU SHUANGJUN; NEUBAUER MICHAEL; PLOETZ THOMAS; OBERLEITNER RONALD; OSTADABBAS SARAH: "Recognition Of Atypical Behavior In Autism Diagnosis From Video Using Pose Estimation Over Time", 2019 IEEE 29TH INTERNATIONAL WORKSHOP ON MACHINE LEARNING FOR SIGNAL PROCESSING (MLSP), IEEE, 13 October 2019 (2019-10-13), pages 1 - 6, XP033645886, DOI: 10.1109/MLSP.2019.8918863
- IYER SOWMYA JAYARAM; SARANYA P.; SIVARAM M.: "Human Pose-Estimation and low-cost Interpolation for Text to Indian Sign Language", 2021 11TH INTERNATIONAL CONFERENCE ON CLOUD COMPUTING, DATA SCIENCE & ENGINEERING (CONFLUENCE), IEEE, 28 January 2021 (2021-01-28), pages 130 - 135, XP033888390, DOI: 10.1109/Confluence51648.2021.9377047

## Description

### RELATED APPLICATION

This application claims priority to Chinese Patent Application No. 2022103327630 filed with the China National Intellectual Property Administration on March 31, 2022 and entitled "DATA PROCESSING METHOD AND APPARATUS, AND DEVICE AND MEDIUM".

### FIELD OF THE TECHNOLOGY

The present disclosure relates to the field of artificial intelligence technologies, and in particular, to a data processing method and apparatus, and a device and a medium.

### BACKGROUND OF THE DISCLOSURE

Computer Vision (CV) technology is a science that studies how to use a machine to "see", and furthermore, that uses a camera and a computer to replace human eyes to perform machine vision such as recognition and measurement, and to further perform graphic processing, so that the computer processes graphics into an image more suitable for human eyes to observe, or an image transmitted to an instrument for detection. As a scientific discipline, CV studies related theories and technologies and attempts to establish an AI system that can acquire information from images or multidimensional data.

Pose estimation can detect positions of various key points in an image or a video, which has wide application value in fields such as movie animation, assisted driving, virtual reality, and action recognition.

In current pose estimation algorithms, key point detection can be performed on the image or the video, and a final object pose can be constructed based on detected key points and object constraint relationships.

DUSH YANT MEHTA et al. "XNect: Real-time Multi-Person 3D Motion Capture with a Single RGB Camera" provides a real-time approach for multi-person 3D motion capture at over 30fps using a single RGB camera. In this approach, Computation is separated into three stages, the first two respectively performing per-frame local (per body joint) and global (all body joints) reasoning, and the third performing temporal reasoning across frames: Stage I infers 2D pose and intermediate 3D pose encoding for visible body joints, using a new SelecSLS tJet architecture. The .3D pose encoding for each joint only considers local context in the kinematic chain. Stage H is a compact fully-connected network that runs in parallel for each detected person, and reconstructs the complete 3D pose, including occluded joints, by leveraging global (full body) context. Stage H1 provides temporal stability, localization relative to the camera, and a joint angle parameterization through kinematic skeleton fitting.

### SUMMARY

The invention is set out in the appended set of claims. Embodiments of the present disclosure provide a data processing method and apparatus, and a device and a medium, which can improve the accuracy of estimating an object pose.

The embodiments of the present disclosure provide a data processing method, performed by a computer device, including:
acquiring an object pose detection result corresponding to an object in an image frame, and a part pose detection result corresponding to a first object part of the object in the image frame, at least one object part of the object being missing in the object pose detection result, and the first object part being one or more parts of the object; and
performing interpolation processing on the at least one object part missing in the object pose detection result according to the part pose detection result and a standard pose associated with the object to obtain a global pose corresponding to the object, the global pose being used for controlling a computer device to realize a service function corresponding to the global pose.

The embodiments of the present disclosure further provide a data processing apparatus, including:
a pose detection module, configured to acquire an object pose detection result corresponding to an object in an image frame, and a part pose detection result corresponding to a first object part of the object in the image frame, at least one object part of the object being missing in the object pose detection result, and the first object part being one or more parts of the object; and
a pose estimation module, configured to perform interpolation processing on the at least one object part missing in the object pose detection result according to the part pose detection result and a standard pose associated with the object to obtain a global pose corresponding to the object, the global pose being used for controlling a computer device to realize a service function corresponding to the global pose.

The embodiments of the present disclosure further provide a computer device, including a memory and a processor, the memory being connected to the processor, the memory being configured to store a computer program, and the processor being configured to invoke the computer program, so that the computer device performs the method in the embodiments of the present disclosure.

The embodiments of the present disclosure further provide a computer-readable storage medium. The computer-readable storage medium stores a computer program. The computer program is adapted to be loaded and executed by a processor, so that the computer device having the processor performs the method in the embodiments of the present disclosure.

The embodiments of the present disclosure further provide a computer program product or a computer program. The computer program product or the computer program includes computer instructions. The computer instructions are stored in a computer-readable storage medium. A processor of a computer device reads the computer instructions from the computer-readable storage medium, and the processor executes the computer instructions, so that the computer device performs the method.

### BRIEF DESCRIPTION OF THE DRAWINGS

FIG. 1 is a schematic structural diagram of a network architecture provided by some embodiments of the present disclosure.
FIG. 2 is a schematic diagram of an object pose estimation scenario of video data provided by some embodiments of the present disclosure.
FIG. 3 is a schematic flowchart of a data processing method provided by some embodiments of the present disclosure.
FIG. 4 is a schematic diagram of a standard pose provided by some embodiments of the present disclosure.
FIG. 5 is a schematic diagram of a scenario of object pose estimation provided by some embodiments of the present disclosure.
FIG. 6 is a schematic diagram of an application scenario of a global pose provided by some embodiments of the present disclosure.
FIG. 7 is a schematic flowchart of another data processing method provided by some embodiments of the present disclosure.
FIG. 8 is a schematic structural diagram of an object detection model provided by some embodiments of the present disclosure.
FIG. 9 is a schematic flowchart of acquiring an object pose detection result provided by some embodiments of the present disclosure.
FIG. 10 is a schematic flowchart of acquiring a part pose detection result provided by some embodiments of the present disclosure.
FIG. 11 is a schematic diagram of correcting object key points provided by some embodiments of the present disclosure.
FIG. 12 is a schematic flowchart of estimating an object pose provided by some embodiments of the present disclosure.
FIG. 13 is a schematic structural diagram of a data processing apparatus provided by some embodiments of the present disclosure.
FIG. 14 is a schematic structural diagram of another data processing apparatus provided by some embodiments of the present disclosure.
FIG. 15 is a schematic structural diagram of a computer device provided by some embodiments of the present disclosure.

### DESCRIPTION OF EMBODIMENTS

The following clearly and completely describes the technical solutions in embodiments of the present disclosure with reference to the drawings in the embodiments of the present disclosure. Apparently, the described embodiments are merely part rather than all embodiments of the present disclosure. All other embodiments obtained by those of ordinary skill in the art based on the embodiments of the present disclosure without creative efforts fall within the scope of protection of the present disclosure.

The present disclosure relates to pose estimation under computer vision technology. The pose estimation is an important task in computer vision, and is also an essential step for a computer to understand an action and a behavior of an object. The pose estimation may be transformed into a problem about predicting object key points. For example, position coordinates of various object key points in an image may be predicted, and an object skeleton in the image may be predicted according to positional relationships among the various object key points. The pose estimation involved in the present disclosure may include object pose estimation for an object, part pose estimation for a specific part of the object, and the like. The object may include, but is not limited to, a human body, an animal, a plant, and the like. The specific part of the object may be a palm, a face, an animal limb, a plant root, and the like. The present disclosure does not limit a type of the object.

When an image or a video is a picture shot in a mobile terminal scenario, the picture of the image or the video may only contain some parts of the object. Then, in a process of performing pose estimation on the parts of the object, due to the missing of some parts of the object, the extracted part information is insufficient, resulting in that a final object pose result is not a complete pose of the object, which affects the integrity of an object pose.

In the embodiments of the present disclosure including the embodiments of both the claims and the specification (hereinafter referred to as "all embodiments of the present disclosure"), an object pose detection result for an object and a part pose detection result for a first object part of the object can be obtained by respectively performing object pose estimation and specific part pose estimation on the object in an image frame, and then pose estimation can be performed on the object in the image frame based on the object pose detection result, the part pose detection result, a standard pose; and part key points missing in the object in the image frame can be compensated, which can ensure the integrity and the rationality of a finally obtained global pose of the object, and then improve the accuracy of estimating the global pose.

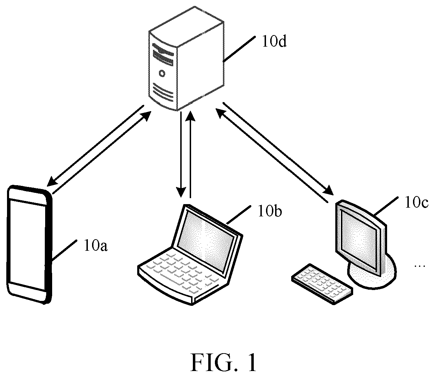

Please refer to FIG. 1, which is a schematic structural diagram of a network architecture according to some embodiments of the present disclosure. As shown in FIG. 1, the network architecture may include a server 10d and a user terminal cluster. The user terminal cluster may include one or more user terminals. The quantity of user terminals is not limited here. As shown in FIG. 1, the user terminal cluster may specifically include a user terminal 10a, a user terminal 10b, a user terminal 10c, and the like.

The server 10d may be an independent physical server, or may be a server cluster or a distributed system composed of a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

Each of the user terminal 10a, the user terminal 10b, the user terminal 10c, and the like may include: electronic devices having an object pose estimation function, such as a smart phone, a tablet, a laptop, a palmtop computer, a mobile Internet device (MID), a wearable device (for example, a smart watch and a smart bracelet), a smart voice interaction device, a smart home appliance (for example, a smart television), and an on-board device. As shown in FIG. 1, the user terminal 10a, the user terminal 10b, the user terminal 10c, and the like may be respectively connected to the server 10d through a network, so that each user terminal may perform data interaction with the server 10d through the network.

The user terminal (for example, the user terminal 10a) in the user terminal cluster as shown in FIG. 1 is integrated with an application client with an object pose estimation function. The application client may include, but is not limited to, a multimedia client (for example, a short video client, a video live streaming client, and a video client), an object management application (for example, a patient care client). The application client in the user terminal 10a may acquire video data. The video data may refer to a video of an object shot in a mobile terminal scenario, for example, the object is shot by using a camera integrated in the user terminal 10a to obtain the video data, or the object is shot by using a camera shooting device (for example, a single-lens reflex camera and a webcam) connected to the user terminal 10a to obtain the video data. In a mobile terminal scenario (for example, a selfie scenario), due to limitations of a shooting distance and a shooting device, a picture in the video data may only contain part of an object. For example, when the object is a human body, the picture in the video data may only contain an upper body of the human body, or only contain the head of the human body. When object pose estimation is performed on the object in the video data, pose repair needs to be performed on the object contained in the video data to obtain a global pose corresponding to the object, which can improve the accuracy of the global pose on the premise of ensuring the integrity of the global pose of the object. In all embodiments of the present disclosure, the global pose may also be referred to as a complete pose, which refers to a pose containing all parts of the object, that is, the pose corresponding to a complete object.

An object pose estimation process involved in all embodiments of the present disclosure may be performed by a computer device. The computer device may be a user terminal in the user terminal cluster shown in FIG. 1, or a server 10d shown in FIG. 1. In a word, the computer device may be a user terminal, or a server, or a combined device of the server and the user terminal. No limits are made thereto in all embodiments of the present disclosure.

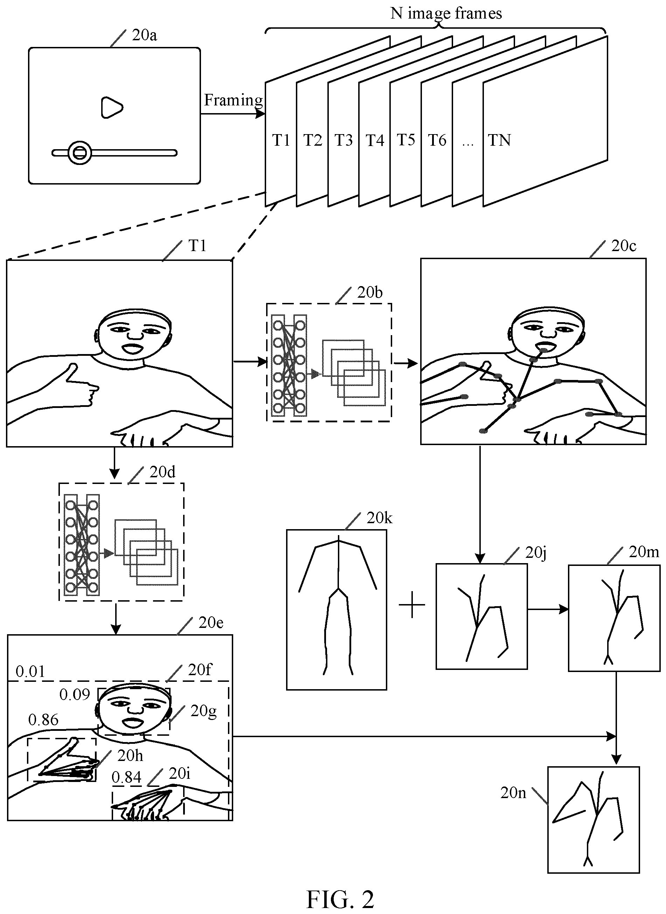

Please refer to FIG. 2, which is a schematic diagram of an object pose estimation scenario of video data provided by some embodiments of the present disclosure. The object pose estimation process in a video is described by taking the user terminal 10a shown in FIG. 1 as an example. As shown in FIG. 2, the user terminal 10a may acquire video data 20a. The video data 20a may be a video of an object shot by a camera integrated in the user terminal 10a, or a video that is transmitted to the user terminal 10 by other devices and is related to the object. Framing processing is performed on the video data 20a to obtain N image frames. N is a positive integer, for example, the value of N may be 1, 2, ... A first image frame (that is, an image frame T1) may be acquired from the N image frames according to a time sequence, and the image frame T1 may be inputted into an object detection model 20b. Object detection is performed on the image frame T1 by the object detection model 20b to obtain an object pose detection result 20c corresponding to the image frame T1. The object pose detection result 20c may include key points of an object contained in the image frame T1 (for the convenience of description, the key points of the object are referred to as object key points below), and positions of these object key points in the image frame T1. The object pose detection result 20c may further contain a first confidence level corresponding to each detected object key point. The first confidence level may be used for characterizing the accuracy of predicting the detected object key points. The greater the first confidence level, the more accurate the detected object key points, and the more likely to be true key points of the object.

For example, when the object in the video data 20a is a human body, the object key points corresponding to the object may be considered as joint points in a human body structure. A key point quantity and a key point class of the object may be pre-defined, for example, the human body structure may include a plurality of object key points of the parts including the limbs, the brain, the waist, and the chest. When the image frame T1 contains a complete object, the image frame T1 may contain all object key points of the object. When the image frame T1 only contains part structures of the object, the image frame T1 may contain part object key points of the object. After the object key points contained in the image frame T1 are detected, the detected object key points may be connected according to the key point class and key point positions of the object, and a result after connection may be marked in the image frame T1, that is, an object pose detection result 20c. The object detection model 20b may be a pre-trained network model and has an object detection function for a video/image. When the object is a human body, the object detection model 20b may also be referred to as a human body pose estimation model.

A human body pose 20j of an object in the image frame T1 may be obtained through the object pose detection result 20c. Due to the missing of some object key points of the human body pose 20j (the missing of human joint points), the user terminal 10a may acquire a standard pose 20k corresponding to the object, and key point compensation may be performed on the human body pose 20j based on the standard pose 20k to obtain a human body pose 20m corresponding to the object in the image frame T1. The standard pose 20k may also be considered as a default pose of the object, or referred to as a reference pose. The standard pose 20k may be pre-constructed based on all object key points of the object, for example, the pose (for example, the global pose) when the human body is standing normally may be determined as the standard pose 20k.

The image frame T1 may also be inputted into the part detection model 20d. A specific part (for example, a first object part) of the object in the image frame T1 is detected through the part detection model 20d to obtain a part pose detection result 20e corresponding to the image frame T1. When it is detected that there is no first object part of the object in the image frame T1, the part pose detection result of the image frame T1 may be determined as null. When it is detected that there is a first object part of the object in the image frame T1, key points of the first object part and positions of the key points may be continued to be detected, the detected key points of the first object part may be connected according to the key point class and key point positions of the first object part, and a result after connection is marked in the image frame T1, that part, a part pose detection result 20e. A key point quantity and a key point class corresponding to the first object part may also be pre-defined. When the object is a human body, the part detection model 20d may be a palm pose estimation model (the first object part is a palm here), for example, the palm may include palm center key points and finger key points. The part detection model 20d may be a pre-trained network model and has an object part detection function for a video/image. For the convenience of description, the key points of the first object part are referred to as part key points below.

As shown in FIG. 2, the part pose detection result 20e carries a second confidence level. The second confidence level may be used for characterizing the possibility that the detected object part is the first object part. For example, the part detection model 20d may determine that the second confidence level that an area 20f in the image frame T1 is the first object part being 0.01, the second confidence level that an area 20g is the first object part being 0.09, the second confidence level that an area 20h is the first object part being 0.86, and the second confidence level that an area 20i is the first object part being 0.84. The greater the second confidence level, the greater the possibility that the area is the first object part. For example, it may be determined that the area 20h and the area 20i contains the first object part based on the second confidence level, and a pose of the first object part may be marked in the area 20h and the area 20i.

Further, the user terminal 10a may perform interpolation processing on some missing object parts in combination with the object pose detection result 20c and the part pose detection result 20e, and obtain a rational object key point through the interpolation processing. For example, when the part pose detection result 20e is a palm key point, the interpolation processing may be performed on the parts such as the wrist and the elbow of the object missing in the image frame T1 in combination with the object pose detection result 20c and the part pose detection result 20e, so as to complete human body pose 20m of the object to obtain a human body pose 20n (which may also be referred to as a global pose). Similarly, after obtaining the global pose corresponding to the object in the image frame T1, object pose estimation may be performed on a subsequent image frame in the video data 20a in the same manner to obtain a global pose corresponding to the object in each image frame, and a behavior of the object in the video data 20a may be obtained based on the global pose corresponding to the N image frames. It is to be understood that the video data 20a may also be a video shot in real time. The user terminal 10a may perform object pose estimation on the image frame in the video data shot in real time to acquire the behavior of the object in real time.

In a word, for the image frame that only contains part objects, the global pose of the object in the image frame may be estimated through the object detection result outputted by the object detection model 20b, the part detection result outputted by the part detection model 20d, and the standard pose 20m, which may ensure the integrity and rationality of the finally obtained global pose of the object, thereby improving the accuracy of estimating the global pose.

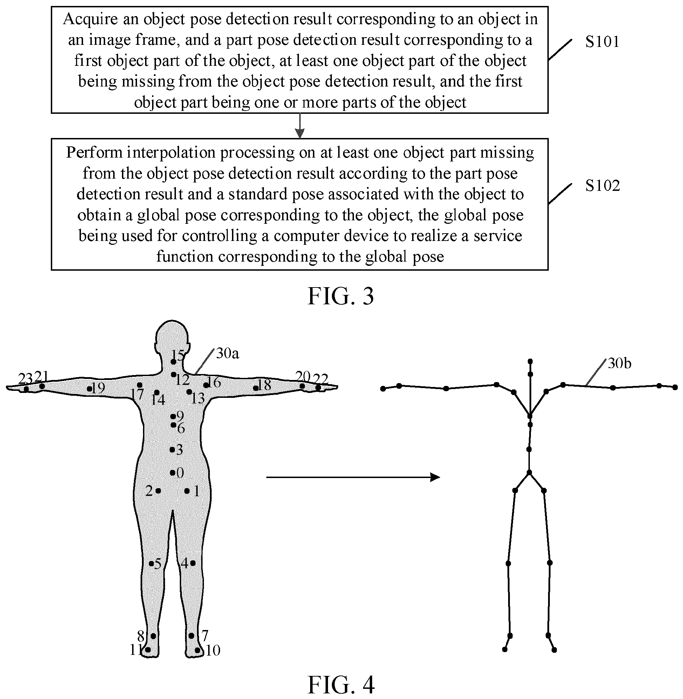

Please refer to FIG. 3, which is a schematic flowchart of a data processing method provided by some embodiments of the present disclosure. As shown in FIG. 3, the data processing method may include the following step S101 and step S102:

Step S101: Acquire an object pose detection result corresponding to an object in an image frame, and a part pose detection result corresponding to a first object part of the object. At least one object part of the object is missing in the object pose detection result, and the first object part is one or more parts of the object.

Specifically, a computer device may acquire video data (for example, the video data 20a in some embodiments corresponding to FIG. 2) or image data of the object shot in a mobile terminal scenario. When pose estimation is performed on the video data or the image data, the computer device may perform object detection on the image frame in the image data or the video data to obtain the object pose detection result for the object (for example, the object pose detection result 20c in some embodiments corresponding to FIG. 2). Meanwhile, part detection may also be performed on the image frame to obtain a part pose detection result for the first object part of the object (for example, the part pose detection result 20e in some embodiments corresponding to FIG. 2). The object may refer to objects contained in the video data, such as a human body, an animal, and a plant. The first object part may refer to one or more parts in the object, such as the face and the palm in a human body structure, the limbs, the tail, and the head in an animal structure, and a root of the plant. Both the type of the object and the type of the first object part are not limited in the present disclosure. Due to the limitation of a distance between a shooting device and a shot object in a mobile terminal scenario, the object in the video data or the image data may have missing parts, that is, the object may have part object parts not in the picture of the video data. The accuracy of estimating the pose of the object can be improved by combining the object pose detection result and the part pose detection result.

For the convenience of description, the embodiment of the present disclosure describes an object pose estimation process of the video data or the image data by taking the object being a human body as an example. If object pose estimation is performed on the image data in the mobile terminal scenario, then the image data is taken as the image frame. Object pose estimation is performed on the video data in the mobile terminal scenario, then framing processing may be performed on the video data to obtain N image frames corresponding to the video data. N is a positive integer. Then, an image frame sequencing containing N image frames may be formed according to a time sequence of the N image frames in the video data, and object pose estimation may be performed on the N image frames in the image frame sequence in sequence. For example, after the completion of the object pose estimation of a first image frame in the image frame sequence, object pose estimation may be continued to be performed on a second image frame in the image frame sequence until the object pose estimation of the whole video data is completed.

The computer device may acquire an object detection model and a part detection model, and input the image frame into the object detection model. An object pose detection result corresponding to the image frame may be outputted through the object detection model. Meanwhile, the image frame may also be inputted into the part detection model. A part pose detection result corresponding to the image frame may be outputted through the part detection model. The object detection model may be configured to detect key points of the object in the image frame (for example, human body key points, which may also be referred to as object key points). At this moment, the object detection model may also be referred to as a human body pose estimation model. The object detection model may include, but is not limited to: DensePose (a real-time human body pose recognition system, configured to realize real-time pose recognition of a dense population), OpenPose (a framework for real-time estimation of body, facial, and hand morphology of a plurality of persons), Realtime Multi-Person Pose Estimation (a real-time multi-person pose estimation model), DeepPose (a deep neural network-based pose estimation method), and mobilenetv2 (a lightweight deep neural network). The type of the object detection model is not limited by the present disclosure. The part detection model may be configured to detect key points of the first object part of the object (for example, palm key points). At this moment, the part detection model may also be referred to as a palm pose estimation model. The part detection model may be a detection-based method or a regression-based method. The detection-based method may predict part key points of the first object part by generating a heat map. The regression-based method may directly regress position coordinates of the part key points. The network structure of the part detection model and the network structure of the object detection model may be the same or may be different. When the network structure of the part detection model and the network structure of the object detection model are the same, network parameters of the two may also be different (obtained by training different data). The type of the part detection model is not limited by the present disclosure.

In some embodiments, the object detection model and the part detection model may be detection models pre-trained by using sample data. For example, the object detection model may be trained by using the sample data carrying human body key point label information (for example, a three-dimensional human body data set), and the part detection model may be trained by using the sample data carrying palm key point information (for example, a palm data set). Or, the object detection model may be an object detection service invoked from an artificial intelligence cloud service through an application interface (API), and the part detection model may be a part detection service invoked by from the artificial intelligence cloud service through the API, which is not specifically limited here.

The artificial intelligence cloud service is also generally referred to as AI as a Service (AIaaS). This is a mainstream service manner for an artificial intelligence platform at present. Specifically, an AIaaS platform will split several common types of AI services and provide independent or packaged services at a cloud. This service manner is similar to opening an AI theme mall: All developers may access and use one or more artificial intelligence services provided by a platform in an API manner, and part experienced developers may also deploy, operate and maintain their own exclusive cloud artificial intelligence services by using AI framework and AI infrastructure provided by the platform.

In some embodiments, the object detection model used in all embodiments of the present disclosure may be a human body three-dimensional pose estimation model with a confidence level. For example, object key points of an object of an image frame may be predicted through an object detection model. Each predicted object key point may correspond to one first confidence level. The first confidence level may be used for characterizing the accuracy of predicting each predicted object key point. The predicted object key points and the corresponding first confidence level may be referred to an object pose detection result corresponding to the image frame. The part detection model may be a palm three-dimensional pose estimation model carrying a confidence level. For example, the part detection model may predict a position area of the first object part in the image frame, and predict part key points of the first object part in the position area. The part detection model may predict to obtain one or more possible position areas where the first object part is located. One position area may correspond to one second confidence level. The second confidence level may be used for characterizing the accuracy of predicting each predicted position area. The predicted part key points and the second confidence level corresponding to the position area may be referred to the part pose detection result corresponding to the image frame.

Step S102: Perform interpolation processing on at least one object part missing in the object pose detection result according to the part pose detection result and a standard pose associated with the object to obtain a global pose corresponding to the object. The global pose is used for controlling a computer device to realize a service function corresponding to the global pose.

Specifically, the computer device may acquire the standard pose corresponding to the object (for example, the standard pose 20m in some embodiments corresponding to FIG. 2). The standard pose may be considered as a complete default pose of the object (marked as a T-pose). The quantity of the standard poses may be one or more, such as a default standing pose of a human body, a default sitting pose of the human body, and a default squatting pose of the human body. The type and the quantity of the standard poses are not limited in the present disclosure.

Please refer to FIG. 4, which is a schematic diagram of a standard pose provided by some embodiments of the present disclosure. As shown in FIG. 4, model 30a may be represented as a skinned multi-person linear (SMPL) model. The model 30a is a parametric human body model, which may be applied to different human body structures. The model 30a may include distribution of human joints: one root node (a node with a sequence number of 0) and 23 joint nodes (nodes represented by sequence number 1 to sequence number 23). The root node is used for performing transformation by taking the whole human body as a complete rigid body (under the action of force, the object that does not change in volume and shape), and the 23 joint nodes may be used for describing local deformation of a human body part. When the object is a human body, the one root node and the 23 joint nodes may be taken as the object key points of the object. The one root node and the 23 joint nodes are connected based on the categories (for example, a wrist joint point, an elbow joint point, a palm joint point, and an ankle joint point) and the positions of the object key points to obtain a standard pose 30b.

The image frame may not contain a complete object. For example, some parts of the object (for example, lower limbs of the human body) is not in the image frame, then the some object key points are missing in the object pose detection result corresponding to the image frame, and key point compensation may be performed on the object pose detection result corresponding to the object through the standard pose to complete the missing object key points to obtain a first candidate object pose corresponding to the object. When the part pose detection result includes part key points of the first object part, the first candidate object pose may be adjusted in combination with the part key points in the part pose detection result and the object key points in the object pose detection result to obtain the global pose of the object in the image frame. After obtaining the global pose corresponding to the current image frame, object pose estimation may be continued to be performed on the next image frame in the video data to obtain the global pose of the object in each image frame of the video data.

In some embodiments, the computer device may determine behavior actions of the object according to the global pose of the object in the video data. The object may be managed or cared through these behavior actions, or human-machine interaction may be performed through the behavior actions of the object. In a word, the global pose of the object in the video data may be applied to a human-machine interaction scenario (for example, virtual reality and human-machine animation), a content review scenario, an automatic driving scenario, a virtual live streaming scenario, and a game or movie character action design scenario. In the human-computer interaction scenario, an image (or a video) of a user (an object) may be collected. After obtaining the global pose in the image or the video, the control of a machine may be realized based on the global pose, for example, a specific instruction is executed based on a specific human body action (determined by the global pose). In a game character action design scenario, a human body action is acquired through the global pose corresponding to the object to replace an expensive action capture device, which can reduce the cost and difficulty of a game character action design.

The virtual live streaming scenario may refer to that a live stream in a live streaming room does not directly play a video of an anchor user (the object), but a video of a virtual object with the same behavior actions as the anchor user is played in the live streaming room. For example, the behavior actions of the anchor user may be determined based on the global pose of the anchor user, and then a virtual object may be driven by the behavior actions of the anchor user, that is, the virtual object with the same behavior actions as the anchor user is constructed, and live-streaming is performed by using the virtual object, which can not only prevent the anchor user from appearing in public view, but also achieve the same live streaming effect as a real anchor user. For example, the computer device may construct a virtual object associated with the object according to the global pose of the object in the video data, and plays the virtual object with the global pose in a multimedia application (for example, a live streaming room, a video website, and a short video application), that is, the video related to the virtual object may be played in the multimedia application, and the pose of the virtual object is synchronized with the pose of the object in the video data. The global pose corresponding to the object in the video data will be reflected on the virtual object played in the multimedia application. Every time the pose of the object changes, the virtual object in the multimedia application will be driven to transform into the same pose (which can be considered as reconstructing a virtual object with a new pose, the new pose here being a pose of the object after a change), so that the poses of the object and the virtual object are kept consistent all the time.

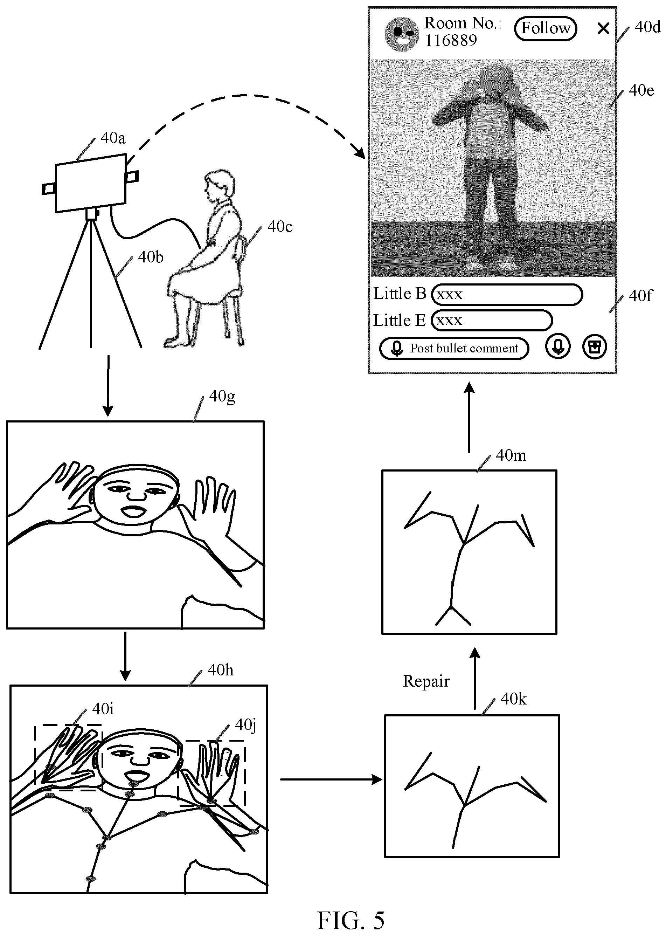

Please refer to FIG. 5, which is a schematic diagram of a scenario of an object pose estimation provided by some embodiments of the present disclosure. The object pose estimation process of the video data is described by taking the virtual live streaming scenario as an example. As shown in FIG. 5, when live streaming needs to be performed, an anchor user 40c (which may be used as an object) may enter a live streaming room (for example, a live streaming room with a room number of 116889), before starting live streaming, the anchor user 40c may select a real person live streaming mode, or may also select a virtual live streaming mode. If the anchor user 40c selects the virtual live streaming mode, a virtual object may be pulled. When the anchor user 40c starts live streaming, the virtual object may be drive by using the behavior actions of the anchor user 40c, so that the virtual object keeps the same pose as the anchor user 40c.

After starting live streaming, the anchor user 40c may collect its video data through a user terminal 40a (for example, a smart phone). At this moment, the anchor user 40c may be used as the object, and the user terminal 40a may be fixed by using a holder 40b. After the user terminal 40a collects the video data of the anchor user 40c, an image frame 40g may be acquired from the video data. The image frame 40g is inputted into each of the object detection model and the part detection model. Part joint points (that is, object key points) of the anchor user 40c contained in the image frame 40g may be predicted by the object detection model. These predicted part joint points may be used as an object pose detection result of the image frame 40g. Palm key points (here, the first object part is a palm by default, and the palm key points may also be referred to as part key points) of the anchor user 40c contained in the image frame 40g may be predicted through the part detection model. These predicted palm key points may be used as a part pose detection result of the image frame 40g. Here, the object pose detection result and the part pose detection result may be marked in the image frame 40g (shown as an image 40h). An area 40i and an area 40j in the image 40h represent the part pose detection result.

As shown in FIG. 5, a human body pose 40k of the anchor user 40c in the image frame 40g may be obtained through the object pose detection result and the part pose detection result shown in the image 40h. Apparently, since the image frame 40g only contains the upper body of the anchor user 40c, the human body pose 40k is not the complete human body pose of the anchor user 40c. In this case, a standard pose (a complete default pose of a human body) may be acquired. Joint point interpolation may be performed on the human body pose 40k through the standard pose to complete missing part joint points in the human body pose 40k to obtain an overall human body pose 40m (a global pose) of the anchor user 40c.

The virtual object in the live streaming room may be drive through the overall human body pose 40m, so that the virtual object 40m in the live streaming room has the same overall human body pose 40k as the anchor user 40c. For a user entering the live streaming room to watch a live streaming video, a display page of the live streaming room where the virtual object is located may be displayed in a user terminal 40d used by the user. The display page of the live streaming room may include an area 40e and an area 40f. The area 40e may be used for playing a video of the virtual object (having the same pose as the anchor user 40c), and the area 40f may be used for posting a bullet comment and the like. In the virtual live streaming scenario, the user entering the live streaming room to watch the live streaming video can only see the video of the virtual object and the voice data of the anchor user 40c, but cannot see the video data of the anchor user 40c. Thus, personal information of the anchor user 40c can be protected, and the same live streaming effect of the anchor user 40c can be achieved through the virtual object.

In some embodiments, the global pose of the object in the video data may be applied to a content review scenario. When the global pose is the same as the pose in a content review system, a review result of the object in the content review system may be determined as a review approval result, and an access permission for the content review approval result system may be set for the object. After the global pose is approved in the content review system, the object may have the permission to access the content review system.

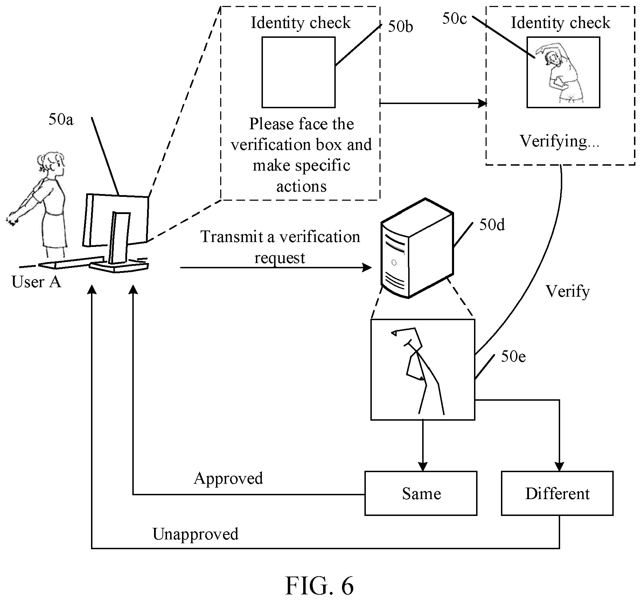

Please refer to FIG. 6, which is a schematic diagram of an application scenario of a global pose provided by some embodiments of the present disclosure. As shown in FIG. 6, a user A (an object) may transmit a verification request to a server 50d through a user terminal 50a. After receiving the verification request transmitted by the user terminal 50a, the server 50d may acquire an identity check manner for the user A and return the identity check manner to the user terminal 50a. A verification box 50b may be displayed in a terminal screen of the user terminal 50a. The user A may frontally align with the verification box 50b in the user terminal 50a and do specific actions (for example, lifting hands, kicking legs, and forking waist). The user terminal 50a may collect a to-be-verified image 50c (which may be considered as the image frame) in the verification box 50b in real time and transmit the to-be-verified image 50c collected in real time to the server 50d.

The server 50d may acquire the to-be-verified image 50c transmitted by the user terminal 50a, and acquire a pose 50e set in the content review system by the user A in advance. The pose 50e may be used as verification information of the user A in the content review system. The server 50d may perform pose estimation on the to-be-verified image 50c by using the object detection model, the part detection model, and the standard pose to obtain the global pose of the user A in the to-be-verified image 50c. Similarity comparison is performed on the global pose corresponding to the to-be-verified image 50c and the pose 50e. When the similarity between the global pose of the to-be-verified image 50c and the pose 50e is greater than or equal to a similarity threshold value (for example, the similarity threshold value may be set as 90%), it may be determined that the global pose of the to-be-verified image 50c is the same as the pose 50e, and the user A is approved in the content review system. When the similarity between the global pose of the to-be-verified image 50c and the pose 50e is less than the similarity threshold value, it may be determined that the global pose of the to-be-verified image 50c is different from the pose 50e, the user A is not approved in the content review system, and action error prompt information is returned to the user terminal 50a. The action error prompt information is used for prompting the user A to redo actions for identity check.

In all embodiments of the present disclosure, an object pose detection result for an object and a part pose detection result for a first object part of the object can be obtained by respectively performing object pose estimation and specific part pose estimation on the object in an image frame, and then pose estimation can be performed on the object in the image frame based on the object pose detection result, the part pose detection result, a standard pose; and part key points missing in the object in the image frame can be compensated, which can ensure the integrity and the rationality of a finally obtained global pose of the object, and then improve the accuracy of estimating the global pose.

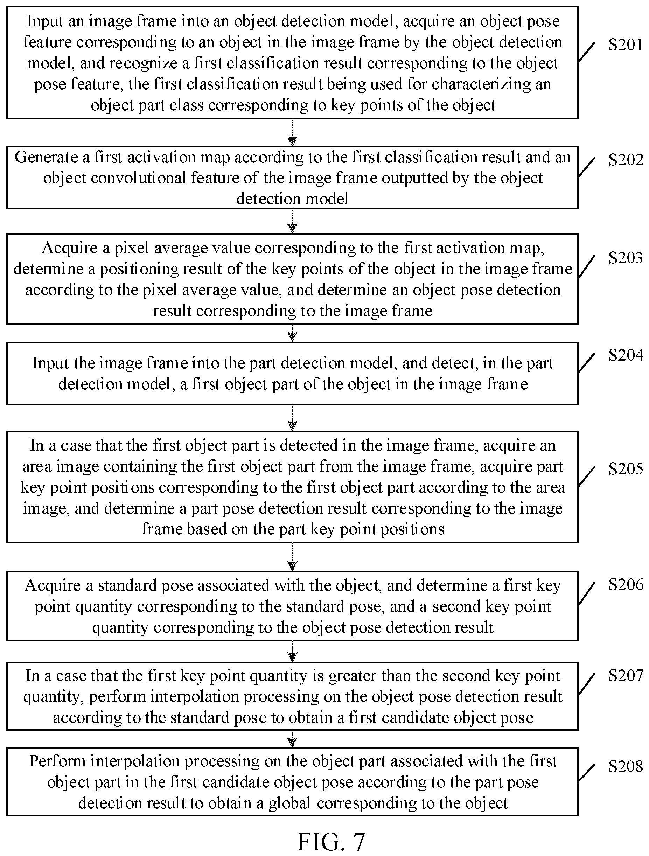

Please refer to FIG. 7, which is a schematic flowchart of another data processing method provided by some embodiments of the present disclosure. As shown in FIG. 7, the data processing method may include the following step S201 to step S208:

Step S201: Input an image frame into an object detection model, acquire an object pose feature corresponding to an object in the image frame by the object detection model, and recognize a first classification result corresponding to the object pose feature. The first classification result is used for characterizing an object part class corresponding to key points of the object.

Specifically, after acquiring the video data shot in a mobile terminal scenario, a computer device may select an image frame from the video data, and input the image frame into a trained object detection model. An object pose feature corresponding to the object in the image frame may be acquired by the object detection model. The first classification result corresponding to the object pose feature may be outputted through a classifier of the object detection model. The first classification result may be used for characterizing an object part class corresponding to the key points of the object (for example, a human body joint). The object pose feature may be an object description feature for the object extracted by the object detection model, or may be a fusion feature between the object description feature corresponding to the object and the part description feature. When the object pose feature is the object description feature corresponding to the object in the image frame, it indicates that part perception-based blocking learning is not introduced in a process of performing feature extraction on the image frame by the object detection model. When the object pose feature is the fusion feature between the object description feature corresponding to the object in the image frame and the part description feature, it indicates that part perception-based blocking learning is introduced in a process of performing feature extraction on the image frame by the object detection model. By introducing part perception-based blocking learning, the object pose feature may include local pose features (part description features) of various parts of the object contained in the image frame, and may include the object description feature of the object contained in the object, which can enhance the fine granularity of the object pose feature, thereby improving the accuracy of the object pose detection result.

In some embodiments, if the part perception-based blocking learning is introduced in a process of performing feature extraction on the image frame by using the object detection model, then the computer device may be configured to: input the image frame into the object detection model, acquire the object description feature corresponding to the object in the image frame in the object detection model, and output a second classification result corresponding to the object description feature according to the classifier in the object detection model; acquire an object convolutional feature for the image frame outputted by a convolutional layer in the object detection model, and perform a product operation on the second classification result and the object convolutional feature to obtain a second activation map corresponding to the image frame; perform blocking processing on the image frame according to the second activation map to obtain M object part area images, and acquire part description features respectively corresponding to the M object part area images according to the object detection model, M being a positive integer; and combine the object description feature and the part description features corresponding to the M object part area images into an object pose feature.

The object description feature may be considered as a feature representation that is extracted from the image frame and is used for characterizing the object. The second classification result may also be used for characterizing an object part class corresponding to key points of the object contained in the image frame. The convolutional layer may refer to the last convolutional layer in the object detection model. The object convolutional feature may represent the convolutional feature, for the image frame, outputted by the last convolutional layer of the object detection model. The second activation map may be a class activation mapping (CAM) corresponding to the image frame. The CAM is a tool for visualizing an image feature. Weighting is performed on the object convolutional feature outputted by the last convolutional layer in the object detection model and the second classification result (the second classification result may be considered as a weight corresponding to the object convolutional feature), and the second activation map may be obtained. The second activation map may be considered as a result after visualizing the object convolutional feature outputted by the convolutional layer, which may be used for characterizing an image pixel area concerned by the object detection model.

The computer device may take the CAM (the second activation map) of each object key point in the image frame as prior information of an area position, and perform blocking processing on the image frame, that is, clip the image frame according to the second activation map to obtain an object part area image containing a single part. Then, feature extraction may be performed on each object part area image by the object detection model to obtain a part description feature corresponding to each object part area image. The foregoing object description feature and the part description feature corresponding to each object part area image may be combined into an object pose feature for the object. The part description feature may be considered as a feature representation that is extracted from the object part area image and is used for characterizing an object part.

Step S202: Generate a first activation map according to the first classification result and an object convolutional feature of the image frame outputted by the object detection model.

Specifically, after obtaining the first classification result, the computer device may perform multiplication on the first classification result and the object convolutional feature of the image frame to generate the first activation map. Both the first activation map and the second activation map are CAMs for the image frame. However, the first activation map takes the first classification result as a weight of the object convolutional feature outputted by the convolutional layer (here, the first classification result combines the object description feature and the part description feature by default), and the second activation map takes the second classification result as a weight of the object convolutional feature outputted by the convolutional layer. The second classification result is only related to the object description feature.

Step S203: Acquire a pixel average value corresponding to the first activation map, determine a positioning result of the key points of the object in the image frame according to the pixel average value, and determine an object pose detection result corresponding to the image frame according to the object part class and the positioning result.

Specifically, the computer device may take the pixel average value of the first activation map and determine the pixel average value as a positioning result of the key points of the object in the image frame, and may determine an object skeleton of the object in the image frame according to the object part class and the positioning result. The object skeleton may be used as an object pose detection result corresponding to the object in the image frame.

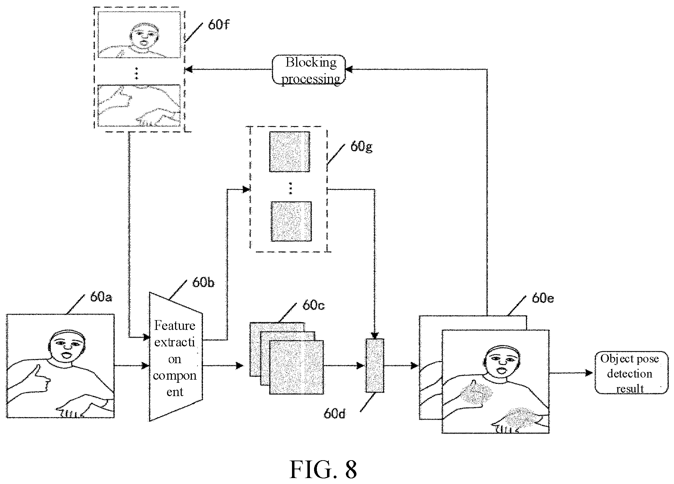

Please refer to FIG. 8, which is a schematic structural diagram of an object detection model provided by some embodiments of the present disclosure. As shown in FIG. 8, after acquiring an image frame 60a, the computer device may input the image frame 60a into the object detection model. Feature extraction is performed on the image frame 60a through a feature extraction component 60b in the object detection model (for example, a feature extraction network may be a convolutional network), and an object description feature 60c corresponding to the object in the image frame 60a may be obtained. The object description feature 60c is processed by using global average pooling (there may be a plurality of object description features, and the global average pooling refers to transforming one object description feature into one numerical value) and an activation function, and processed results are classified to obtain the second classification result. Weighting is performed on the second classification result and the object convolutional feature outputted by the last convolutional layer in the feature extraction component 60b to obtain the second activation map.

Blocking processing is performed on the image frame 60a based on the second activation map to obtain M object part area images 60f. The M object part area images 60f are inputted into the feature extraction component 60b in the object detection model in sequence. Part description features 60g respectively corresponding to the M object part area images 60f may be obtained through the feature extraction component 60b. Feature combination is performed on the M part description features 60g and the object description feature 60c of the image frame 60a to obtain an object pose feature. A first classification result 60d may be obtained by recognizing an object pose feature. A first activation map 60e may be obtained by performing weighting on the first classification result 60d and the object convolutional feature outputted by the last convolutional layer in the feature extraction component 60b. A pixel average value of the first activation map 60e may be taken as a positioning result of the object in the image frame 60a, and the object pose detection result corresponding to the object in the image frame 60a may be obtained on this basis.

A manner of acquiring the object pose detection result described in some embodiments corresponding to FIG. 8 is only an example of the embodiment of the present disclosure. The object pose detection result may also be obtained in other manners in the present disclosure. No limits are made thereto in the present disclosure.

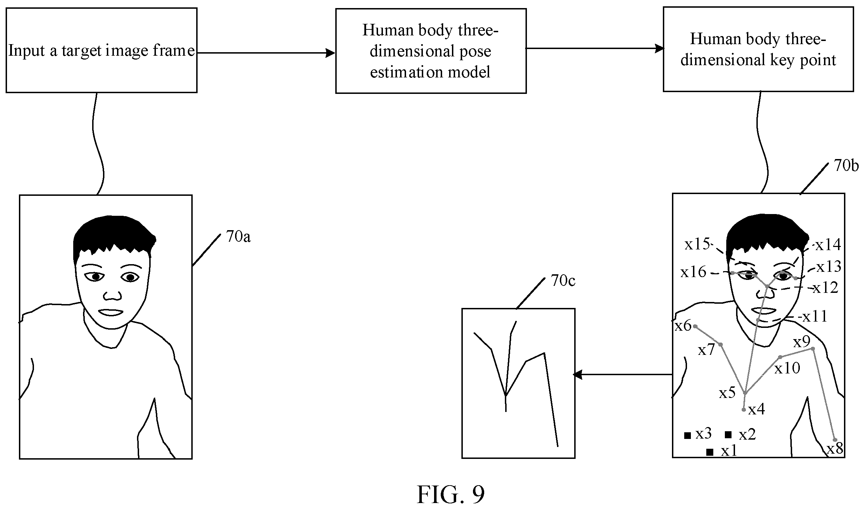

Please refer to FIG. 9, which is a schematic flowchart of acquiring an object pose detection result provided by some embodiments of the present disclosure. As shown in FIG. 9, taking the object detection model being a human body three-dimensional pose estimation model as an example, the computer device may input an image frame 70a into the human body three-dimensional pose estimation model. Human body three-dimensional key points of an object (at this moment, the object is a human body) in the image frame 70a may be acquired through the human body three-dimensional pose estimation model. As shown in FIG. 9, if 16 human body three-dimensional key points contained in the image frame 70a are detected through the human body three-dimensional pose estimation model, which are respectively marked as x1 to x16, each human body three-dimensional key point may correspond to a position coordinate and a first confidence level. The possibility that the detected human body three-dimensional key points are real human body key points may be determined based on the first confidence level. For example, human body three-dimensional key points with the first confidence level greater than a first confidence threshold value (which may be set according to actual needs) may be considered as real human body key points (for example, the human body three-dimensional key points represented by x4 to x16). A human body pose 70c (which may also be considered as an object pose detection result) may be obtained by connecting the real human body key points. The human body three-dimensional key points with the first confidence level less than or equal to the first confidence threshold value are abnormal key points, and these abnormal key points may be compensated in subsequent processing to obtain more accurate human body key points.

It is to be understood that a spatial coordinate system is constructed by using image frames, and the position coordinates of the human body three-dimensional key points may refer to the spatial coordinates within the spatial coordinate system.

Step S204: Input the image frame into the part detection model, and detect, in the part detection model, a first object part of the object in the image frame.

Specifically, the computer device may also input the image frame into the part detection model, and detect, in the part detection model, whether the image frame contains the first object part of the object. The part detection model may be configured to detect key points of the first object part, so the first object part in the image frame needs to be detected. In a case that the first object part of the object is not detected in the image frame, then the part pose detection result corresponding to the image frame may be directly determined as a null value, and a subsequent step of detecting the key points of the first object part does not need to be performed.

Step S205: In a case that the first object part is detected in the image frame, acquire an area image containing the first object part from the image frame, acquire part key point positions corresponding to the first object part according to the area image, and determine a part pose detection result corresponding to the image frame based on the part key point positions.

Specifically, in a case that the first object part is detected in the image frame, a position area of the first object part in the image frame may be determined, and the image frame is clipped based on the position area of the first object part in the image frame to obtain an area image containing the first object part. Feature extraction may be performed on the area image in the part detection model to acquire a part contour feature corresponding to the first object part in the area image, and the part key point positions corresponding to the first object part may be predicted according to the part contour feature. Key points of the first object part may be connected based on the part key point positions to obtain the part pose detection result corresponding to the image frame.

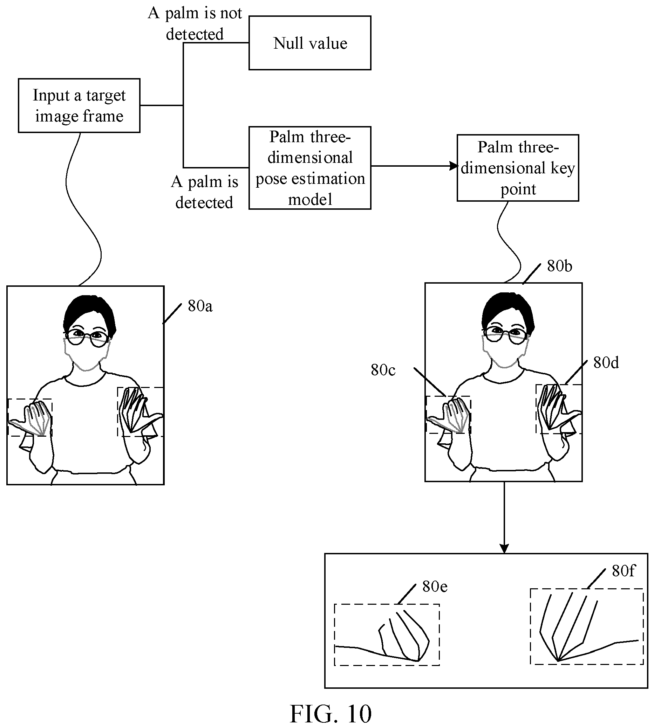

Please refer to FIG. 10, which is a schematic flowchart of acquiring a part pose detection result provided by some embodiments of the present disclosure. As shown in FIG. 10, taking the part detection model being a palm three-dimensional pose estimation model as an example, the computer device may input an image frame 80a into the palm three-dimensional pose estimation model. Whether the image frame 80a contains a palm of an object (a first object part) may be detected in the palm three-dimensional pose estimation model. In a case that a palm is not detected in the image frame 80a, it may be determined that the part pose detection result corresponding to the image frame 80a is a null value. In a case that a palm is detected in the image frame 80a, an area containing the palm (for example, an area 80c and an area 80d in an image 80b) may be determined in the image frame 80a. The area 80c contains a right palm of the object, and the area 80d contains a left palm of the object. Palm three-dimensional key points in the area 80c and palm three-dimensional key points in the area 80d may be detected through the palm three-dimensional pose estimation model.

The palm three-dimensional pose estimation model may acquire a plurality of possible areas, and predict a second confidence level that each possible area contains the palm. The area with the second confidence level greater than a second confidence threshold value (which may be the same as or different from the foregoing first confidence threshold value, which is not limited here) is determined as the area containing the palm, for example, the second levels corresponding to both the area 80c and the area 80d are greater than the second confidence threshold value. A right palm pose 80e may be obtained by connecting the palm key points detected in the area 80c, and a left palm pose 80f may be obtained by connecting the palm key points detected in the area 80d. The left palm pose 80f and the right palm pose 80e may be referred to as a part pose detection result corresponding to the image frame 80a.

Step S206: Acquire a standard pose associated with the object, and determine a first key point quantity corresponding to the standard pose, and a second key point quantity corresponding to the object pose detection result.

Specifically, the computer device may acquire a standard pose corresponding to the object, and count the first key point quantity of the object key points contained in the standard pose and the second key point quantity of the object key points contained in the object pose detection result. The first key point quantity is known when the standard pose is constructed, and the second key point quantity is the quantity of object key points predicted by the object detection model.

Step S207: In a case that the first key point quantity is greater than the second key point quantity, perform interpolation processing on the object pose detection result according to the standard pose to obtain a first candidate object pose.

Specifically, in a case that the first key point quantity is greater than the second key point quantity, it indicates that there are missing object key points in the object pose detection result, and key point compensation (interpolation processing) may be performed on the object pose detection result through the standard pose to complete missing object key points to obtain the first candidate object pose corresponding to the object. As shown in FIG. 2, a human body pose 20m may be obtained by performing key point compensation on a human body pose 20j (the object pose detection result) through the standard pose 20k. At this moment, the human body pose 20m may be referred to as the first candidate object pose.

For example, assuming that the object is a human body, in a case that key points of the parts such as knees, ankles, feet, and elbows are missing in the object pose detection result predicted by the object detection model, interpolation processing may be performed on the object pose detection result through the standard pose, for example, adding missing object key points, to obtain a more rational first candidate object pose. The integrity and rationality of the object pose can be improved by performing interpolation on the object pose detection result through the standard pose.

Step S208: Perform interpolation processing on the object part associated with the first object part in the first candidate object pose according to the part pose detection result to obtain a global pose corresponding to the object.

Specifically, in an actual application scenario, a pose change of the object depends on a few parts of the object to a great extent, that is, some specific parts of the object (for example, an arm part in a human body structure, the arm part may include key points of the parts such as a palm, a wrist, and an elbow) plays an important role on a final result. Therefore, in all embodiments of the present disclosure, interpolation processing may be performed on the object part associated with the first object part in the first candidate object pose based on the part pose detection result to obtain a global pose corresponding to the object. In some embodiments, in a case that the part pose detection result is a null value (that is, the image frame does not contain the first object part), then the first candidate object pose may be directly determined as the global pose corresponding to the object.

For example, assuming that the object is a human body, the first object part is a palm. When the image frame contains an elbow part, key points for the elbow part may be predicted by the object detection model. When the image frame does not contain the elbow part, key points for the elbow part cannot be predicted by the object detection model. At this moment, elbow key points and wrist key points of the object may be determined based on a part pose detection result. The elbow key points and wrist key points are added to the first candidate object pose, and the global pose corresponding to the object may be obtained.

In some embodiments, the object includes a second object part and a third object part. The second object part and the third object part are symmetrical. For example, the second object part is a right arm of the object, and the third object part is a left arm of the object. The second object part is a right leg of the object, and the third object part is a left leg of the object.

In a case that the part pose detection result includes all part key points of the first object part (in a case that the first object part is a palm, it is assumed that the part pose detection result includes left and right palm key points here), if the object pose detection result contains a pose of the second object part and the object pose detection result does not contain a pose of the third object part, that is, the image frame contains the second object part, but does not contain the third object part, then a first part direction corresponding to the third object part may be determined according to the key point positions of the first object part contained in the part pose detection result. The second object part and the third object part are symmetrical parts of the object. The second object part and the third object part are symmetrical parts, so the length of the second object part is the same as the length of the third object part, a first part length of the second object part in the first candidate object pose may be acquired, and key point positions of the third object part may be determined according to the first part length and the first part direction. The key point positions of the third object part are added to the first candidate object pose to obtain the global pose corresponding to the object in the image frame.

In a case that the object pose detection result does not contain poses of the second object part and the third object pose, that is, the image frame does not contain the second object part or the third object part, then a second part direction corresponding to the second object part and a third part direction corresponding to the third object part may be determined according to the key point positions of the first object part contained in the part pose detection result. A second part length corresponding to the second object part and a third part length corresponding to the third object part may be acquired from the (i-1)^{th} image frame. In other words, a length of the second object part in a previous image frame may be taken as a length of the second object part in the image frame, and a length of the third object part in the previous image frame may be taken as a length of the third object part in the image frame. Then, key point positions of the second object part may be determined according to the second part length and the second part direction. Key point positions of the third object part may be determined according to the third part length and the third part direction, and the key point positions of the second object part and the key point positions of the third object part may be added to the first candidate object pose to obtain the global pose corresponding to the object in the image frame. In a case that the (i-1)^{th} image frame also does not contain the second object part and the third object part, then it can be continued to be backtracked to acquire the lengths of the second object part and the third object part in the (i-2)th image frame to determine key point positions of the second object part and the third object part in the image frame. In a case that both the second object part and the third object part are not detected in the image frame previous to the image frame, then an approximate length may be set for each of the second object part and the third object part according to the first candidate object pose to determine key point positions of the second object part and the third object part in the image frame.

For example, assuming that the object is a human body, the first object part is a palm, and the second object part and the third object part are respectively a left arm and a right arm. On a premise that a left palm and a right palm are detected in the image frame, a direction of a left forearm may be calculated through key points of the left palm, a direction of a right forearm may be calculated through key points of the right palm, the left forearm belongs to part of the left arm, and the right forearm belongs to part of the right arm.

In a case that the left arm and the right arm are detected in the image frame, then the lengths of the left and right forearms (the second part length and the third part length) in an image frame (for example, the (i-1)^{th} image frame) previous to the image frame may be taken as the lengths of the left and right forearms in the image frame. In a case that both the left arm and the right arm are not detected in the image frame or in a previous image frame, then reference lengths of the left and right forearms in the image frame may be assigned with reference to shoulder lengths in the image frame. In a case that any arm (for example, the left arm) of the left and right arms is detected in the image frame, then the length of the left arm (the first part length) may be directly assigned to the right forearm. For example, a right wrist point A, a right palm point B, and a right elbow point C are known to be missing, the direction of the right forearm may be represented as a direction from the right palm point B to the right wrist point A, and may be marked as a vector BA; and the length of the left forearm may be represented as a length from the right palm point A to the right wrist point C, and may be marked as L. Position coordinates of the right elbow point C may be calculated through the above information, which may be expressed as: C=A+BA_normal*L. C represents the position coordinates of the right elbow point C, A represents the position coordinates of the right palm point A, and BA_normal represents a unit vector of the vector BA.

It is to be understood that, in a case that the left and right arms are detected in the image frame, then an elbow point predicted by the object detection model may be adjusted and updated based on the detected palm key points, which can improve the accuracy of the elbow point, and then improve the rationality of the global pose.

In some embodiments, there may be some irrational key points in the pose obtained by performing interpolation processing on the first candidate object pose based on the part pose detection result. Therefore, the irrational object key points may be corrected in combination with a standard pose, so as to obtain a final global pose of the object. Specifically, assuming that the third object part is not detected in the image frame, the computer device may determine the first candidate object pose added with the key point positions of the third object part as a second candidate object pose. Then, a pose offset between the standard pose and the second candidate object pose may be acquired. In a case that the pose offset is greater than an offset threshold value (which can be understood as a maximum angle that an object may offset in a normal case), key point correction is performed on the second candidate object pose based on the standard pose to obtain the global pose corresponding to the object in the image frame. The pose offset may be understood as a related angle between the second candidate object pose and the standard pose. For example, when the object is a human body, the pose offset may be an included angle between a shoulder of the second candidate object pose and a shoulder of the standard pose, and the like.

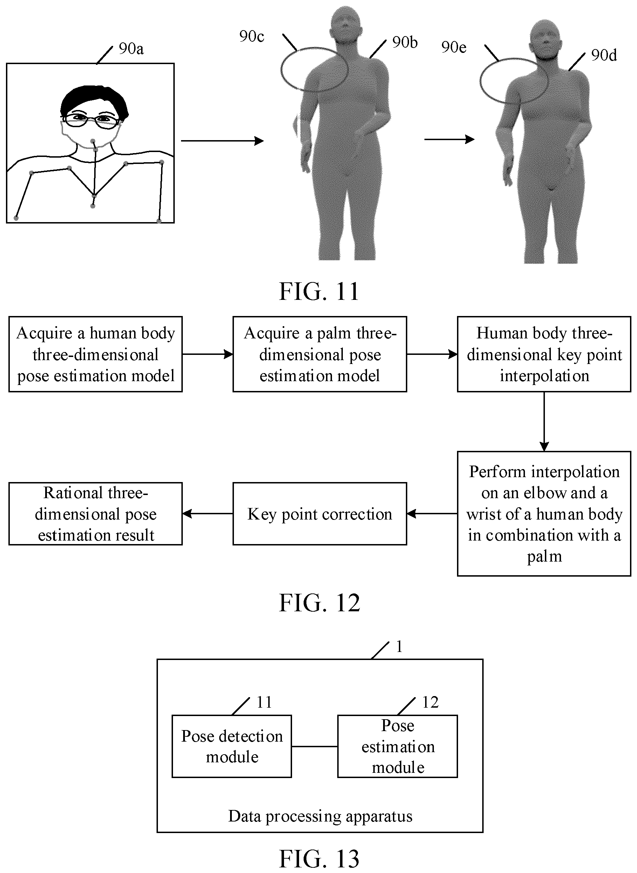

Please refer to FIG. 11, which is a schematic diagram of correcting object key points provided by some embodiments of the present disclosure. As shown in FIG. 11, for an image frame 90a, a human body model 90b may be constructed based on a second candidate object pose after obtaining the second candidate object pose corresponding to the image frame 90a. Due to the limitation of the performance of the object detection model, an area 90c (for example, a shoulder area) in the human body model 90b has an obvious collapse problem compared with a normal human body structure (for example, the standard pose). For example, an included angle between the shoulder of the first candidate object pose and the shoulder of the standard pose is greater than the offset threshold value. The computer device may correct the human body model 90c through the standard pose to obtain a human body model 90d. An area 90e in the human body model 90d may be a result after the area 90c is corrected. A human body pose corresponding to the human body model 90d may be referred to as a global pose corresponding to the object in the image frame 90a.

The video data shot in a mobile terminal scenario usually cannot contain the overall object, and the pose for the object predicted by the object detection model is incomplete. The rationality of the global pose can be improved by performing processing such as key point interpolation and key point correction. Object key point positions associated with the first object part may be calculated through the part pose detection result, which can improve the accuracy of the global pose.

Please refer to FIG. 12, which is a schematic flowchart of object pose estimation provided by some embodiments of the present disclosure. As shown in FIG. 12, assuming that the object is a human body, the computer device may acquire a human body three-dimensional pose estimation model (an object pose detection model) with a confidence level and a palm three-dimensional pose estimation model (a part detection model) with a confidence level. Human body three-dimensional key points in any image frame (an image frame) may be predicted through the human body three-dimensional estimation model. These human body three-dimensional key points may form an object pose detection result. Palm three-dimensional key points in any image frame (an image frame) may be predicted through the palm three-dimensional estimation model. These palm three-dimensional key points may form a part pose detection result. Interpolation processing may be performed on the human body three-dimensional key points predicted by the human body three-dimensional pose estimation model according to a default human body pose (the standard pose), so as to complete missing human body key points. Interpolation processing may also be performed on the elbow and the wrist of the human body (the object) in combination with the palm three-dimensional key points and the human body three-dimensional key points to obtain a candidate human body pose (the second candidate object pose described above). In a case that human body key points that do not conform to a normal human body structure are detected in the candidate human body pose (that is, the human body key points with pose offsets greater than the offset threshold value), these human body key points that do not conform to a normal human body structure may be corrected to finally obtain a rational three-dimensional pose estimation result (that is, the global pose described above).

It is to be understood that, in a specific implementation of the present disclosure, video collection of a user may be involved. When the above embodiments of the present disclosure are applied to a specific product or technology, user permission or consent needs to be acquired, and the collection, use, and processing of relevant data need to comply with relevant laws, regulations, and standards of relevant countries and regions.

In all embodiments of the present disclosure, an object pose detection result for an object and a part pose detection result for a first object part of the object can be obtained by respectively performing object pose estimation and specific part pose estimation on the object in an image frame, and then pose estimation can be performed on the object in the image frame based on the object pose detection result, the part pose detection result, the standard pose; and part key points missing in the object in the image frame can be compensated, and the object key points that do not conform the standard pose can be corrected, which can ensure the integrity and the rationality of a finally obtained global pose of the object, and then improve the accuracy of estimating the global pose.

Please refer to FIG. 13, which is a schematic structural diagram of a data processing apparatus provided by some embodiments of the present disclosure. As shown in FIG. 13, the data processing apparatus 1 may include: a pose detection module 11 and a pose estimation module 12.

The pose detection module 11 is configured to acquire an object pose detection result corresponding to an object in an image frame and a part pose detection result corresponding to a first object part of the object in the image frame. At least one object part of the object is missing in the object pose detection result, and the first object part is one or more parts of the object.

The pose estimation module 12 is configured to perform interpolation processing on the at least one object part missing in the object pose detection result according to the part pose detection result and a standard pose associated with the object to obtain a global pose corresponding to the object. The global pose is used for controlling a computer device to realize a service function corresponding to the global pose.

For implementations of specific functions of the pose detection module 11 and the pose estimation module 12, refer to the descriptions for step S101 and step S102 in the embodiment corresponding to FIG. 3, and details are not described herein again.

In all embodiments of the present disclosure, an object pose detection result for the object and a part pose detection result for the first object part of the object can be obtained by respectively performing global object pose estimation and specific part pose estimation on the object in the image frame, and then pose estimation can be performed on the object in the image frame based on the object pose detection result, the part pose detection result, a standard pose; and part key points missing in the object in the image frame can be compensated, which can ensure the integrity and the rationality of a finally obtained global pose of the object, and then improve the accuracy of estimating the global pose.

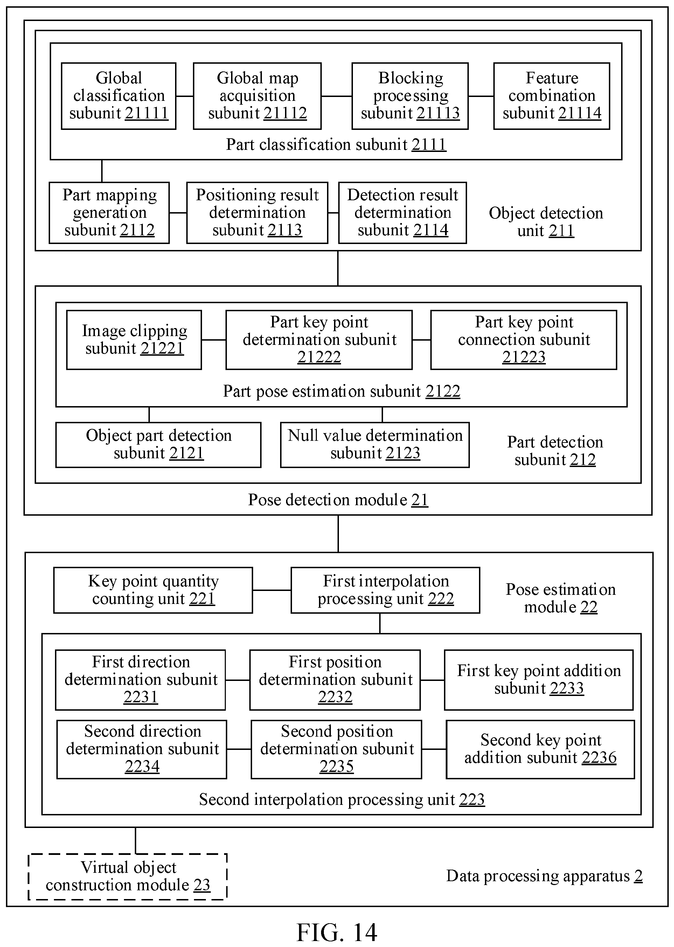

Please refer to FIG. 14, which is a schematic structural diagram of another data processing apparatus provided by some embodiments of the present disclosure. As shown in FIG. 14, the data processing apparatus 2 includes: a pose detection module 21, a pose estimation module 22, and a virtual object construction module 23.

The pose detection module 21 is configured to acquire an object pose detection result corresponding to an object in an image frame and a part pose detection result corresponding to a first object part of the object in the image frame. At least one object part of the object is missing in the object pose detection result, and the first object part is one or more parts of the object.

The pose estimation module 22 is configured to perform interpolation processing on the at least one object part missing in the object pose detection result according to the part pose detection result and a standard pose associated with object to obtain a global pose corresponding to the object.

The virtual object construction module 23 is configured to construct a virtual object associated with the object, and control the pose of the virtual object according to the global pose.

For implementations of specific functions of the pose detection module 21, the pose estimation module 22, and the virtual object construction module 23, refer to the descriptions for foregoing relevant steps, and details are not described herein again.

In one or more embodiments, the pose detection module 21 includes: an object detection unit 211 and a part detection unit 212.

The object detection unit 211 is configured to input the image frame into an object detection model, and acquire the object pose detection result by the object detection model.

The part detection unit 212 is configured to input the image frame into a part detection model, and acquire the part pose detection result through the part detection model.

For implementations of specific functions of the object detection unit 211 and the part detection unit 212, refer to step S101 in the embodiment corresponding to FIG. 3, and details are not described herein again.

In one or more embodiments, the object detection unit 211 may include: a part classification subunit 2111, a part map generation subunit 2112, a positioning result determination subunit 2113, and a detection result determination subunit 2114.

The part classification subunit 2111 is configured to input an image frame into an object detection model, acquire an object pose feature corresponding to an object in the image frame by the object detection model, and recognize a first classification result corresponding to the object pose feature. The first classification result is used for characterizing an object part class corresponding to key points of the object.

The part map generation subunit 2112 is configured to generate a first activation map according to the first classification result and an object convolutional feature of the image frame outputted by the object detection model.

The positioning result determination subunit 2113 is configured to acquire a pixel average value corresponding to the first activation map, and determine a positioning result of the key points of the object in the image frame according to the pixel average value.

The detection result determination subunit 2114 is configured to determine the object pose detection result corresponding to the image frame according to the object part class and the positioning result.

For implementations of specific functions of the part classification subunit 2111, the part map generation subunit 2112, the positioning result determination subunit 2113, and the detection result determination subunit 2114, refer to step S201 to step S203 in the embodiment corresponding to FIG. 7, and details are not described herein again.

In one or more embodiments, the part classification subunit 2111 includes: a global classification subunit 21111, a global map acquisition subunit 21112, a blocking processing subunit 21113, and a feature combination subunit 21114.

The global classification subunit 21111 is configured to acquire an object description feature corresponding to the object in the image frame in the object detection model, and output a second classification result corresponding to the object description feature according to a classifier in the object detection model.

The global map acquisition subunit 21112 is configured to acquire an object convolutional feature for the image frame outputted by a convolutional layer in the object detection model, and perform a product operation on the second classification result and the object convolutional feature to obtain a second activation map corresponding to the image frame.

The blocking processing subunit 21113 is configured to perform blocking processing on the image frame according to the second activation map to obtain M object part area images, and acquire part description features respectively corresponding to the M object part area images according to the object detection model. M is a positive integer.

The feature combination subunit 21114 is configured to combine the object description feature and the part description features corresponding to the M object part area images into an object pose feature.

For implementations of specific functions of the global classification subunit 21111, the global map acquisition subunit 21112, the blocking processing subunit 21113, and the feature combination subunit 21114, refer to step S201 in the embodiment corresponding to FIG. 7, and details are not described herein again.

In one or more embodiments, the part detection unit 212 may include: an object part detection unit 2121, a part pose estimation subunit 2122, and a null value determination subunit 2123.

The object part detection unit 2121 is configured to input the image frame into the part detection model, and detect, in the part detection model, a first object part of the object in the image frame.

The part pose estimation subunit 2122 is configured to: in a case that the first object part is detected in the image frame, acquire an area image containing the first object part from the image frame, acquire part key point positions corresponding to the first object part according to the area image, and determine a part pose detection result corresponding to the image frame based on the part key point positions.

The null value determination subunit 2123 is configured to: in a case that first object part is not detected in the image frame, determine the part pose detection result corresponding to the image frame is a null value.

For implementations of specific functions of the object part detection unit 2121, the part pose estimation subunit 2122, and the null value determination subunit 2123, refer to step S204 to step S205 in the embodiment corresponding to FIG. 7, and details are not described herein again.

In one or more embodiments, the part pose estimation subunit 2122 may also include: an image clipping subunit 21221, a part key point determination subunit 21222, and a part key point connection subunit 21223.

The image clipping subunit 21221 is configured to: in a case that the first object part is detected in the image frame, clip the image frame to obtain an area image containing the first object part.

The part key point determination subunit 21222 is configured to acquire a part contour feature corresponding to the area image, and predict part key point positions corresponding to the first object part according to the part contour feature.

The part key point connection subunit 21223 is configured to connect key points of the first object part based on the part key point positions to obtain the part pose detection result corresponding to the image frame.

For implementations of specific functions of the image clipping subunit 21221, the part key point determination subunit 21222, and the part key point connection subunit 21223, refer to step S205 in the embodiment corresponding to FIG. 7, and details are not described herein again.

In one or more embodiments, the pose estimation module 22 includes: a key point quantity determination unit 221, a first interpolation processing unit 222, and a second interpolation processing unit 223.

The key point quantity determination unit 221 is configured to acquire a standard pose associated with the object, and determine a first key point quantity corresponding to the standard pose, and a second key point quantity corresponding to the object pose detection result.

The first interpolation processing unit 222 is configured to: in a case that the first key point quantity is greater than the quantity second key points, perform interpolation processing on the at least one object part missing in the object pose detection result according to the standard pose to obtain a first candidate object pose.

The second interpolation processing unit 223 is configured to: perform interpolation processing on the object part associated with the first object part in the first candidate object pose configured according to the part pose detection result to obtain a global pose corresponding to the object.

For implementations of specific functions of the key point quantity determination unit 221, the first interpolation processing unit 222, and the second interpolation processing unit 223, refer to step S206 to step S208 in the embodiment corresponding to FIG. 7, and details are not described herein again.

In one or more embodiments, the second interpolation processing unit 223 may include: a first direction determination subunit 2231, a first position determination subunit 2232, and a first key point addition subunit 2233.

The first direction determination subunit 2231 is configured to: in a case that the object pose detection result contains a pose of a second object part and the object pose detection result does not contain a pose of a third object part, determine a first part direction corresponding to the third object part according to the key point positions of the first object part contained in the part pose detection result. The second object part and the third object part are symmetrical parts of the object, and the second object part and the third object part are associated with the first object part.

The first position determination subunit 2232 is configured to acquire a first part length of the second object part in the first candidate object pose, and determine key point positions of the third object part according to the first part length and the first part direction.

The first key point addition subunit 2233 is configured to add the key point positions of the third object part to the first candidate object pose to obtain the global pose corresponding to the object in the image frame.

In some embodiments, the first key point addition subunit 2233 is specifically configured to:
add the key point positions of the third object part to the first candidate object pose to obtain a second candidate object pose corresponding to the object in the image frame, and acquire a pose offset between the standard pose and the second candidate object pose; and
in a case that the pose offset is greater than an offset threshold value, perform key point correction on the second candidate object pose based on the standard pose to obtain the global pose corresponding to the object in the image frame.

In some embodiments, the image frame is an ith image frame in video data, and i is a positive integer. The second interpolation processing unit 223 may further include: a second direction determination subunit 2234, a second position determination subunit 2235, and a second key point addition subunit 2236.

The second direction determination subunit 2234 is configured to: in a case that the object pose detection result does not contain poses of the second object part and the third object pose, then determine a second part direction corresponding to the second object part and a third part direction corresponding to the third object part according to the key point positions of the first object part contained in the part pose detection result. The second object part and the third object part are symmetrical parts of the object, and the second object part and the third object part are associated with the first object part.

The second position determination subunit 2235 is configured to acquire, in a jth image frame, a second part length corresponding to the second object part and a third part length corresponding to the third object part, and determine key point positions of the second object part according to the second part length and the second part direction. Where, j is a positive integer, and j is less than i.

The second key point addition subunit 2236 is configured to determine key point positions of the third object part according to the third part length and the third part direction, and add the key point positions of the second object part and the key point positions of the third object part to the first candidate object pose to obtain the global pose corresponding to the object in the image frame.

For implementations of specific functions of the first direction determination subunit 2231, the first position determination subunit 2232, the first key point addition subunit 2233, the second direction determination subunit 2234, the second position determination subunit 2235, and the second key point addition subunit 2236, refer to step S208 in the embodiment corresponding to FIG. 7, and details are not described herein again. When the first direction determination subunit 2231, the first position determination subunit 2232, the first key point addition subunit 2233 perform corresponding operations, the second direction determination subunit 2234, the second position determination subunit 2235, and the second key point addition subunit 2236 all pause performing operations. When the second direction determination subunit 2234, the second position determination subunit 2235, and the second key point addition subunit 2236 perform corresponding operations, the first direction determination subunit 2231, the first position determination subunit 2232, the first key point addition subunit 2233 all pause performing operations.

In all embodiments of the present disclosure, an object pose detection result for an object and a part pose detection result for a first object part of the object can be obtained by respectively performing object pose estimation and specific part pose estimation on the object in an image frame, and then pose estimation can be performed on the object in the image frame based on the object pose detection result, the part pose detection result, the standard pose; and part key points missing in the object in the image frame can be compensated, and the object key points that do not conform the standard pose can be corrected, which can ensure the integrity and the rationality of a finally obtained global pose of the object, and then improve the accuracy of estimating the global pose.

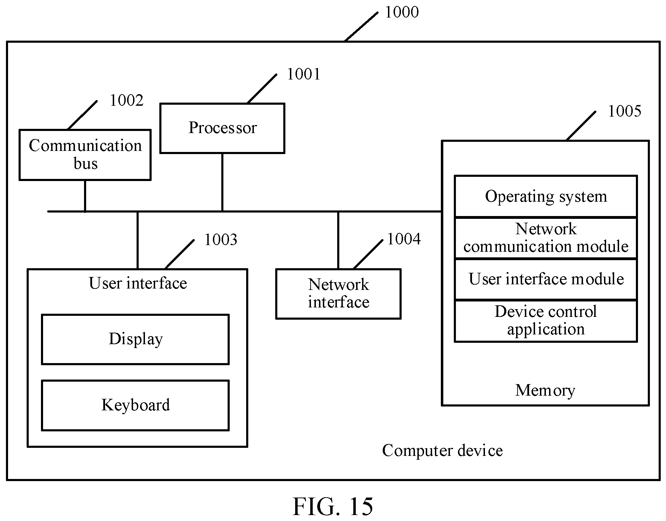

Please refer to FIG. 15, which is a schematic structural diagram of a computer device provided by some embodiments of the present disclosure. As shown in FIG. 15, the computer device 1000 may be a user terminal, for example, a user terminal 10a in some embodiments corresponding to FIG. 1 described above, or may be a server, for example, a server 10d in some embodiments corresponding to FIG. 1 described above. No limits are made thereto in all embodiments of the present disclosure. For the convenience of understanding, the present disclosure takes the computer device being the user terminal as an example, the computer device 1000 may include: a processor 1001, a network interface 1004, and a memory 1005. In addition, the computer device 1000 may further include: a user interface 1003, and at least one communication bus 1002. The communication bus 1002 is configured to implement connection and communication between these components. The user interface 1003 may further include a standard wired interface and wireless interface. The network interface 1004 may include a standard wired interface and a standard wireless interface (for example, a wireless fidelity (WI-FI) interface). The memory 1005 may be a high-speed random access memory (RAM) memory, or may be a non-volatile memory, for example, at least one magnetic disk memory. Optionally, the memory 1005 may also be at least one storage apparatus that is located far away from the foregoing processor 1001. As shown in FIG. 15, the memory 1005 used as a computer storage medium may include an operating system, a network communication module, a user interface module, and a device control application.

The user interface 1004 in the computer device 1000 may also provide a network communication function, and optionally, the user interface 1003 may further include a display, and a keyboard. In the computer device 1000 as shown in FIG. 15, the network interface 1004 may provide a network communication function. The user interface 1003 is mainly configured to provide an interface for a user to input. The processor 1001 may be configured to invoke a device control application stored in the memory 1005 to implement:
acquiring an object pose detection result corresponding to an object in an image frame and a part pose detection result corresponding to a first object part of the object in the image frame, at least one object part of the object being missing in the object pose detection result, and the first object part being one or more parts of the object; and
performing interpolation processing on the at least one object part missing in the object pose detection result according to the part pose detection result and a standard pose associated with the object to obtain a global pose corresponding to the object, the global pose being used for controlling a computer device to realize a service function corresponding to the global pose.

It is to be understood that the computer device 1000 described in all embodiments of the present disclosure may perform the descriptions of the data processing method in any embodiment in the foregoing FIG. 3 and FIG. 7, may also perform the descriptions of the data processing apparatus 1 in some embodiments corresponding to the foregoing FIG. 13, or may also perform the descriptions of the data processing apparatus 2 in some embodiments corresponding to the foregoing FIG. 14, and details are not described herein again. In addition, the descriptions of beneficial effects of the same method are also not described herein again.

In addition, some embodiments of the present disclosure further provides a computer-readable storage medium. The computer-readable storage medium stores a computer program. The computer device includes computer instructions. A processor can perform the descriptions of the data processing method in any embodiment in the foregoing FIG. 3 and FIG. 7 when executing the computer instructions. In addition, the descriptions of beneficial effects of the same method are also not described herein again. For technical details that are not disclosed in the computer-readable storage medium embodiment involved in the present disclosure, please refer to the descriptions of the method embodiments of the present disclosure. As an example, the computer instructions may be deployed on a computing device for executing, or executed on a plurality of computing devices located at a location, or executed on a plurality of computing devices distributed at a plurality of locations and interconnected through communication networks. The computing devices distributed at a plurality of locations and interconnected through the communication networks may form a blockchain system.

In addition, some embodiments of the present disclosure further provides a computer program product and a computer program. The computer program product and the computer program may include computer instructions. The computer instructions may be stored in a computer-readable storage medium. The processor of the computer device reads the computer instructions from the computer-readable storage medium, and the processor may execute the computer instructions, so that the computer device performs the descriptions of the data processing method in any embodiment of the foregoing FIG. 3 and FIG. 7, and details are not described herein again.. In addition, the descriptions of beneficial effects of the same method are also not described herein again. For technical details that are not disclosed in the computer program product or the computer program embodiments involved in the present disclosure, please refer to the descriptions of the method embodiments of the present disclosure.

To simplify the descriptions, the foregoing method embodiments are described as a series of action combination. But those skilled in the art are to be understood that the present disclosure is not limited to the described sequence of the action, as some steps can be performed in other sequences or simultaneously according to the present disclosure. Secondly, those skilled in the art are also to be understood that all the embodiments described in the specification are preferred embodiments, and the actions and modules involved are not necessarily mandatory to the present disclosure.

The steps in the method embodiments of the present disclosure may be reordered, combined, or deleted according to actual needs.

The modules in the apparatus embodiments of the present disclosure may be combined, divided, or deleted according to actual needs.

Those skilled in the art can understand that all or part of the processes in the method embodiments described above may be implemented by a computer program to instruct related hardware, and the computer program may be stored in a computer-readable storage medium. When the program is executed, the process of each method embodiment as described above may be included. The storage medium may be a magnetic disk, an optical disk, a read-only memory (ROM), a RAM, or the like.

What is disclosed above is merely exemplary embodiments of the present disclosure, and is certainly not intended to limit the scope of the claims of the present disclosure. Therefore, equivalent variations made in accordance with the claims of the present disclosure still fall within the scope of the present disclosure.

## Claims

1. A data processing method, performed by a computer device, comprising:
acquiring (S101) an object pose detection result (20c) of an object (40c) in an image frame (40g, 60a) and a part pose detection result (20e) of a first part of the object (40c) in the image frame, wherein the object (40c) includes a plurality of parts, at least one part among the plurality of parts other than the first part is missing in the image frame; and
interpolating (S102), in the object pose detection result (20c), key points corresponding to the at least one part missing in the image frame according to the part pose detection result (20e) and a pre-set reference pose (20k, 30b) associated with the object (40c) to obtain a global pose (40m) including all parts of the object; wherein the pre-set reference pose is obtained based on a parametric human body model applicable for different human body structures;
wherein the interpolating, in the object pose detection result (20c), key points corresponding to the at least one object part missing in the object pose detection result (20c) according to the part pose detection result (20e) and the pre-set reference pose (20k, 30b) associated with the object (40c) to obtain the global pose (40m) of the object (40c) comprises:
acquiring (S206) the pre-set reference pose (20k, 30b) associated with the object, and determining a first number of key points in the reference pose (20k, 30b) and a second number of key points in the object pose detection result (20c);
in a case that the first number is greater than the second number, interpolating (S207), in the object pose detection result (20c), key points corresponding to the at least one object part missing in the object pose detection result (20c) according to the reference pose (20k, 30b) to obtain a first candidate object pose detection result; and
interpolating (S208) key points in the first candidate object pose detection result at an object part corresponding to the first part according to the part pose detection result (20e) to obtain the global pose (40m) corresponding to the object;
wherein the interpolating key points in the first candidate object pose detection result at the object part corresponding to the first part according to the part pose detection result (20e) to obtain the global pose (40m) corresponding to the object (40c) comprises any one of and ii):
i) in a case that the object pose detection result (20c) contains a pose of a second part but does not contain a pose of a third part, determining a first part direction corresponding to the third part according to positions of a second set of key points of the first part contained in the part pose detection result (20e), the second part and the third part being symmetrical parts of the object, and the second part and the third part being connected with the first part;
acquiring a first part length of the second part in the first candidate object pose detection result, and determining positions of the key points for the third part according to the first part length and the first part direction; and
adding the key points for the third part to the first candidate object pose detection result to obtain the global pose (40m) corresponding to the object (40c) in the image frame; and
ii) wherein the image frame is an i^{th} image frame in video data, and i is a positive integer;
in a case that the object pose detection result (20c) does not contain poses of a second part and a third part of the object, then determining a second part direction corresponding to the second part and a third part direction corresponding to the third part according to the second set of key points corresponding to the first part contained in the part pose detection result (20e), the second part and the third part being symmetrical parts of the object, and the second part and the third part being connected with the first part;
acquiring, in a j^{th} image frame, a second part length corresponding to the second part and a third part length corresponding to the third part, and determining key points for the second part according to the second part length and the second part direction, j being a positive integer, and j being less than i; and
determining the key points for the third part according to the third part length and the third part direction, and adding the key points for the second part and the key points for the third part to the first candidate object pose detection result to obtain the global pose (40m) corresponding to the object (40c) in the image frame.

2. The method according to claim 1, wherein the acquiring the object pose detection result (20c) of the object in the image frame and the part pose detection result (20e) of the first part of the object (40c) in the image frame comprises:
inputting the image frame into an object detection model (20b), and acquiring the object pose detection result (20c) by the object detection model (20b), wherein the object pose detection result (20c) comprises a first set of connected key points corresponding to the plurality parts of the object; and
inputting the image frame into a part detection model (20d) which is used for detecting pose of the first part, and acquiring the part pose detection result (20e) through the part detection model(20d), wherein the part pose detection result (20e) comprises a second set of connected key points corresponding to the first part of the object.

3. The method according to claim 2, wherein the inputting the image frame into the object detection model (20b), and acquiring the object pose detection result (20c) by the object detection model (20b) comprises:
inputting (S201) the image frame into the object detection model (20b), acquiring an object pose feature of the object (40c) by the object detection model (20b), and recognizing a first classification result (60d) of the object pose feature by a classifier of the object detection model (20b), the first classification result (60d) representing a part category corresponding to the first set of key points;
generating (S202) a first activation map (60e) according to the first classification result (60d) and object convolutional features outputted by a last convolution layer of the object detection model (20b); and
acquiring (S203) a pixel average value of the first activation map (60e), and determining a position of each key point of the first set of key points according to the pixel average value; and
determining (S203) the object pose detection result (20c) according to the part category and the position of each key point of the first set of key points;
wherein the object pose feature is a fusion feature between an object description feature and a part description feature; the acquiring the object pose feature of the object by the object detection model (20b) comprises:
acquiring the object description feature (60c) corresponding to the object (40c) in the image frame (60a) in the object detection model (20b), and outputting a second classification result of the object description feature (60c) by the classifier in the object detection model (20b);
acquiring the object convolutional features outputted by the last convolutional layer in the object detection model (20b), and obtaining a second activation map of the image frame based on the second classification result and the object convolutional features;
dividing the image frame (60a) into blocks according to the second activation map to obtain M part area image blocks (60f), and acquiring part description features (60g) respectively corresponding to the M part area image blocks (60f), M being a positive integer; and
combining the object description feature (60c) and the part description features (60g) corresponding to the M part area image blocks (60f) to obtain the object pose feature.

4. The method according to claim 2, wherein the inputting the image frame into the part detection model(20d), and acquiring the part pose detection result (20e) through the part detection model(20d) comprises:
inputting (S204) the image frame into the part detection model (20d), and detecting whether the first part of the object (40c) exists in the image frame;
in a case that the first part is detected in the image frame, acquiring (S205) an area image (80c, 80d) containing the first part from the image frame, acquiring positions of the second set of key points of the first part according to the area image (80c, 80d), and determining the part pose detection result (20e) corresponding to the image frame based on the positions of the second set of key points; and
in a case that the first part is not detected in the image frame, determining that the part pose detection result (20e) corresponding to the image frame is null.

5. The method according to claim 4, wherein the acquiring the area image containing the first part from the image frame, acquiring positions of the second set of key points of the first part according to the area image, and determining the part pose detection result (20e) corresponding to the image frame based on the positions of the second set of key points comprises:
clipping the image frame to obtain the area image containing the first part;
acquiring a contour feature of the first part, and predicting the positions of the second set of key points of the first part according to the contour feature; and
connecting the second set of key points of the first part based on their positions to obtain the part pose detection result (20e).

6. The method according to claim 1 with option i), wherein the adding the key point for the third part to the first candidate object pose detection result to obtain the global pose (40m) corresponding to the object in the image frame comprises:
adding the key point for the third part to the first candidate object pose detection result to obtain a second candidate object pose detection result (90b) corresponding to the object (40c) in the image frame, and acquiring a pose offset between the reference pose (20k, 30b) and the second candidate object pose detection result (90b); and
in a case that the pose offset is greater than an offset threshold value, performing key point correction on the second candidate object pose detection result (90b) based on the reference pose (20k, 30b) to obtain the global pose (90d) corresponding to the object (40c) in the image frame.

7. The method according to claim 1, further comprising:
constructing a virtual object associated with the object, and controlling the pose of the virtual object according to the global pose (40m).

8. The method according to claim 1, further comprising:
creating a virtual object according to the global pose of the object, wherein the virtual object has the same global pose as the object; and
displaying the virtual object in a virtual scene of a multimedia application.

9. A computer device, comprising a memory and a processor,
the memory being connected to the processor, the memory being configured to store a computer program, and the processor being configured to invoke the computer program, so that the computer device performs the method according to any one of claims 1 to 8.

10. A computer-readable storage medium, wherein the computer-readable storage medium stores a computer program; and the computer program is adapted to be loaded and executed by a processor, so that the computer device having the processor performs the method according to any one of claims 1 to 8.

11. A computer program product, comprising a computer program/instructions, wherein the computer program/instructions, when executed by a processor, implement the method according to any one of claims 1 to 8.

## Patentansprüche

1. Datenverarbeitungsverfahren, durchgeführt durch eine Computervorrichtung, umfassend:
Erfassen (S101) eines Objektposenerkennungsergebnisses (20c) eines Objekts (40c) in einem Bildframe (40g, 60a) und eines Teilposenerkennungsergebnisses (20e) eines ersten Teils des Objekts (40c) in dem Bildframe, wobei das Objekt (40c) eine Vielzahl von Teilen umfasst, wobei mindestens ein Teil unter der Vielzahl von Teilen außer dem ersten Teil in dem Bildframe fehlt; und
Interpolieren (S102), in dem Objektposenerkennungsergebnis (20c), von Schlüsselpunkten, die dem mindestens einen in dem Bildframe fehlenden Teil entsprechen, gemäß dem Teilposenerkennungsergebnis (20e) und einer voreingestellten Referenzpose (20k, 30b), die dem Objekt (40c) zugeordnet ist, um eine globale Pose (40m) zu erhalten, die alle Teile des Objekts umfasst; wobei die voreingestellte Referenzpose basierend auf einem parametrischen Menschenkörpermodell erhalten wird, das für verschiedene Menschenkörperstrukturen anwendbar ist;
wobei das Interpolieren, in dem Objektposenerkennungsergebnis (20c), von Schlüsselpunkten, die dem mindestens einen in dem Objektposenerkennungsergebnis (20c) fehlenden Objektteil entsprechen, gemäß dem Teilposenerkennungsergebnis (20e) und der voreingestellten Referenzpose (20k, 30b), die dem Objekt (40c) zugeordnet ist, um die globale Pose (40m) des Objekts (40c) zu erhalten, umfasst:
Erfassen (S206) der voreingestellten Referenzpose (20k, 30b), die dem Objekt zugeordnet ist, und Bestimmen einer ersten Anzahl von Schlüsselpunkten in der Referenzpose (20k, 30b) und einer zweiten Anzahl von Schlüsselpunkten in dem Objektposenerkennungsergebnis (20c);
in einem Fall, dass die erste Anzahl größer als die zweite Anzahl ist, Interpolieren (S207), in dem Objektposenerkennungsergebnis (20c), von Schlüsselpunkten, die dem mindestens einen in dem Objektposenerkennungsergebnis (20c) fehlenden Objektteil entsprechen, gemäß der Referenzpose (20k, 30b), um ein erstes Kandidaten-Objektposenerkennungsergebnis zu erhalten; und
Interpolieren (S208) von Schlüsselpunkten in dem ersten Kandidaten-Objektposenerkennungsergebnis an einem Objektteil, der dem ersten Teil entspricht, gemäß dem Teilposenerkennungsergebnis (20e), um die globale Pose (40m) zu erhalten, die dem Objekt entspricht;
wobei das Interpolieren von Schlüsselpunkten in dem ersten Kandidaten-Objektposenerkennungsergebnis an dem Objektteil, der dem ersten Teil entspricht, gemäß dem Teilposenerkennungsergebnis (20e), um die globale Pose (40m) zu erhalten, die dem Objekt (40c) entspricht, eines von i) und ii) umfasst:
i) in einem Fall, dass das Objektposenerkennungsergebnis (20c) eine Pose eines zweiten Teils enthält, aber keine Pose eines dritten Teils enthält, Bestimmen einer ersten Teilrichtung, die dem dritten Teil entspricht, gemäß Positionen eines zweiten Satzes von Schlüsselpunkten des ersten Teils, der in dem Teilposenerkennungsergebnis (20e) enthalten ist, wobei der zweite Teil und der dritte Teil symmetrische Teile des Objekts sind, und wobei der zweite Teil und der dritte Teil mit dem ersten Teil verbunden sind;
Erfassen einer ersten Teillänge des zweiten Teils in dem ersten Kandidaten-Objektposenerkennungsergebnis, und Bestimmen von Positionen der Schlüsselpunkte für den dritten Teil gemäß der ersten Teillänge und der ersten Teilrichtung; und
Hinzufügen der Schlüsselpunkte für den dritten Teil zu dem ersten Kandidaten-Objektposenerkennungsergebnis, um die globale Pose (40m) zu erhalten, die dem Objekt (40c) in dem Bildframe entspricht; und
ii) wobei der Bildframe ein i. Bildframe in Videodaten ist, und i eine positive ganze Zahl ist;
in einem Fall, dass das Objektposenerkennungsergebnis (20c) keine Posen eines zweiten Teils und eines dritten Teils des Objekts enthält, dann Bestimmen einer zweiten Teilrichtung, die dem zweiten Teil entspricht, und einer dritten Teilrichtung, die dem dritten Teil entspricht, gemäß dem zweiten Satz von Schlüsselpunkten, der dem ersten Teil entspricht, der in dem Teilposenerkennungsergebnis (20e) enthalten ist, wobei der zweite Teil und der dritte Teil symmetrische Teile des Objekts sind, und wobei der zweite Teil und der dritte Teil mit dem ersten Teil verbunden sind;
Erfassen, in einem j. Bildframe, einer zweiten Teillänge, die dem zweiten Teil entspricht, und einer dritten Teillänge, die dem dritten Teil entspricht, und Bestimmen von Schlüsselpunkten für den zweiten Teil gemäß der zweiten Teillänge und der zweiten Teilrichtung, wobei j eine positive ganze Zahl ist, und wobei j kleiner als i ist; und
Bestimmen der Schlüsselpunkte für den dritten Teil gemäß der dritten Teillänge und der dritten Teilrichtung, und Hinzufügen der Schlüsselpunkte für den zweiten Teil und der Schlüsselpunkte für den dritten Teil zu dem ersten Kandidaten-Objektposenerkennungsergebnis, um die globale Pose (40m) zu erhalten, die dem Objekt (40c) in dem Bildframe entspricht.

2. Verfahren nach Anspruch 1, wobei das Erfassen des Objektposenerkennungsergebnisses (20c) des Objekts in dem Bildframe und des Teilposenerkennungsergebnisses (20e) des ersten Teils des Objekts (40c) in dem Bildframe umfasst:
Eingeben des Bildframes in ein Objekterkennungsmodell (20b), und Erfassen des Objektposenerkennungsergebnisses (20c) durch das Objekterkennungsmodell (20b), wobei das Objektposenerkennungsergebnis (20c) einen ersten Satz von verbundenen Schlüsselpunkten umfasst, der der Vielzahl von Teilen des Objekts entspricht; und
Eingeben des Bildframes in ein Teilerkennungsmodell (20d), das zum Detektieren einer Pose des ersten Teils verwendet wird, und Erfassen des Teilposenerkennungsergebnisses (20e) durch das Teilerkennungsmodell (20d), wobei das Teilposenerkennungsergebnis (20e) einen zweiten Satz von verbundenen Schlüsselpunkten umfasst, der dem ersten Teil des Objekts entspricht.

3. Verfahren nach Anspruch 2, wobei das Eingeben des Bildframes in das Objekterkennungsmodell (20b), und Erfassen des Objektposenerkennungsergebnisses (20c) durch das Objekterkennungsmodell (20b) umfasst:
Eingeben (S201) des Bildframes in das Objekterkennungsmodell (20b), Erfassen eines Objektposenmerkmals des Objekts (40c) durch das Objekterkennungsmodell (20b), und Erkennen eines ersten Klassifikationsergebnisses (60d) des Objektposenmerkmals durch einen Klassifikator des Objekterkennungsmodells (20b), wobei das erste Klassifikationsergebnis (60d) eine Teilkategorie darstellt, die dem ersten Satz von Schlüsselpunkten entspricht;
Erzeugen (S202) einer ersten Aktivierungskarte (60e) gemäß dem ersten Klassifikationsergebnis (60d) und Objektfaltungsmerkmalen, die durch eine letzte Faltungsschicht des Objekterkennungsmodells (20b) ausgegeben werden; und
Erfassen (S203) eines Pixeldurchschnittswerts der ersten Aktivierungskarte (60e), und Bestimmen einer Position jedes Schlüsselpunkts des ersten Satzes von Schlüsselpunkten gemäß dem Pixeldurchschnittswert; und
Bestimmen (S203) des Objektposenerkennungsergebnisses (20c) gemäß der Teilkategorie und der Position jedes Schlüsselpunkts des ersten Satzes von Schlüsselpunkten;
wobei das Objektposenmerkmal ein Fusionsmerkmal zwischen einem Objektbeschreibungsmerkmal und einem Teilbeschreibungsmerkmal ist; wobei das Erfassen des Objektposenmerkmals des Objekts durch das Objekterkennungsmodell (20b) umfasst:
Erfassen des Objektbeschreibungsmerkmals (60c), das dem Objekt (40c) in dem Bildframe (60a) entspricht, in dem Objekterkennungsmodell (20b), und Ausgeben eines zweiten Klassifikationsergebnisses des Objektbeschreibungsmerkmals (60c) durch den Klassifikator in dem Objekterkennungsmodell (20b);
Erfassen der Objektfaltungsmerkmale, die durch die letzte Faltungsschicht in dem Objekterkennungsmodell (20b) ausgegeben werden, und Erhalten einer zweiten Aktivierungskarte des Bildframes basierend auf dem zweiten Klassifikationsergebnis und den Objektfaltungsmerkmalen;
Unterteilen des Bildframes (60a) in Blöcke gemäß der zweiten Aktivierungskarte, um M Teilbereichsbildblöcke (60f) zu erhalten, und Erfassen von Teilbeschreibungsmerkmalen (60g), die jeweils den M Teilbereichsbildblöcken (60f) entsprechen, wobei M eine positive ganze Zahl ist; und
Kombinieren des Objektbeschreibungsmerkmals (60c) und der Teilbeschreibungsmerkmale (60g), die den M Teilbereichsbildblöcken (60f) entsprechen, um das Objektposenmerkmal zu erhalten.

4. Verfahren nach Anspruch 2, wobei das Eingeben des Bildframes in das Teilerkennungsmodell (20d), und Erfassen des Teilposenerkennungsergebnisses (20e) durch das Teilerkennungsmodell (20d) umfasst:
Eingeben (S204) des Bildframes in das Teilerkennungsmodell (20d), und Detektieren, ob der erste Teil des Objekts (40c) in dem Bildframe existiert;
in einem Fall, dass der erste Teil in dem Bildframe detektiert wird, Erfassen (S205) eines Bereichsbilds (80c, 80d), das den ersten Teil enthält, aus dem Bildframe, Erfassen von Positionen des zweiten Satzes von Schlüsselpunkten des ersten Teils gemäß dem Bereichsbild (80c, 80d), und Bestimmen des Teilposenerkennungsergebnisses (20e), das dem Bildframe entspricht, basierend auf den Positionen des zweiten Satzes von Schlüsselpunkten; und
in einem Fall, dass der erste Teil in dem Bildframe nicht detektiert wird, Bestimmen, dass das Teilposenerkennungsergebnis (20e), das dem Bildframe entspricht, null ist.

5. Verfahren nach Anspruch 4, wobei das Erfassen des Bereichsbilds, das den ersten Teil enthält, aus dem Bildframe, Erfassen von Positionen des zweiten Satzes von Schlüsselpunkten des ersten Teils gemäß dem Bereichsbild, und Bestimmen des Teilposenerkennungsergebnisses (20e), das dem Bildframe entspricht, basierend auf den Positionen des zweiten Satzes von Schlüsselpunkten umfasst:
Zuschneiden des Bildframes, um das Bereichsbild zu erhalten, das den ersten Teil enthält;
Erfassen eines Konturmerkmals des ersten Teils, und Vorhersagen der Positionen des zweiten Satzes von Schlüsselpunkten des ersten Teils gemäß dem Konturmerkmal; und
Verbinden des zweiten Satzes von Schlüsselpunkten des ersten Teils basierend auf ihren Positionen, um das Teilposenerkennungsergebnis (20e) zu erhalten.

6. Verfahren nach Anspruch 1 mit Option i), wobei das Hinzufügen des Schlüsselpunkts für den dritten Teil zu dem ersten Kandidaten-Objektposenerkennungsergebnis, um die globale Pose (40m) zu erhalten, die dem Objekt in dem Bildframe entspricht, umfasst:
Hinzufügen des Schlüsselpunkts für den dritten Teil zu dem ersten Kandidaten-Objektposenerkennungsergebnis, um ein zweites Kandidaten-Objektposenerkennungsergebnis (90b) zu erhalten, das dem Objekt (40c) in dem Bildframe entspricht, und Erfassen eines Posenversatzes zwischen der Referenzpose (20k, 30b) und dem zweiten Kandidaten-Objektposenerkennungsergebnis (90b); und
in einem Fall, dass der Posenversatz größer als ein Versatz-Schwellenwert ist, Durchführen einer Schlüsselpunktkorrektur an dem zweiten Kandidaten-Objektposenerkennungsergebnis (90b) basierend auf der Referenzpose (20k, 30b), um die globale Pose (90d) zu erhalten, die dem Objekt (40c) in dem Bildframe entspricht.

7. Verfahren nach Anspruch 1, ferner umfassend:
Konstruieren eines virtuellen Objekts, das dem Objekt zugeordnet ist, und Steuern der Pose des virtuellen Objekts gemäß der globalen Pose (40m).

8. Verfahren nach Anspruch 1, ferner umfassend:
Erstellen eines virtuellen Objekts gemäß der globalen Pose des Objekts, wobei das virtuelle Objekt die gleiche globale Pose wie das Objekt aufweist; und
Anzeigen des virtuellen Objekts in einer virtuellen Szene einer Multimediaanwendung.

9. Computervorrichtung, umfassend einen Speicher und einen Prozessor,
wobei der Speicher mit dem Prozessor verbunden ist, wobei der Speicher konfiguriert ist, ein Computerprogramm zu speichern, und wobei der Prozessor konfiguriert ist, das Computerprogramm aufzurufen, so dass die Computervorrichtung das Verfahren nach einem der Ansprüche 1 bis 8 durchführt.

10. Computerlesbares Speichermedium, wobei das computerlesbare Speichermedium ein Computerprogramm speichert; und wobei das Computerprogramm dazu geeignet ist, durch einen Prozessor geladen und ausgeführt zu werden, so dass die Computervorrichtung, die den Prozessor aufweist, das Verfahren nach einem der Ansprüche 1 bis 8 durchführt.

11. Computerprogrammprodukt, umfassend ein Computerprogramm/Anweisungen, wobei das Computerprogramm/die Anweisungen, wenn sie durch einen Prozessor ausgeführt werden, das Verfahren nach einem der Ansprüche 1 bis 8 implementieren.

## Revendications

1. Procédé de traitement de données, exécuté par un dispositif informatique, comprenant :
l'acquisition (S101) d'un résultat de détection de pose d'objet (20c) d'un objet (40c) dans une trame d'image (40g, 60a) et d'un résultat de détection de pose de partie (20e) d'une première partie de l'objet (40c) dans la trame d'image, dans lequel l'objet (40c) comprend une pluralité de parties, au moins une partie parmi la pluralité de parties autre que la première partie étant manquante dans la trame d'image ; et
l'interpolation (S102), dans le résultat de détection de pose d'objet (20c), de points clés correspondant à l'au moins une partie manquante dans la trame d'image selon le résultat de détection de pose de partie (20e) et une pose de référence prédéfinie (20k, 30b) associée à l'objet (40c) pour obtenir une pose globale (40m) comprenant toutes les parties de l'objet ; dans lequel la pose de référence prédéfinie est obtenue sur la base d'un modèle paramétrique de corps humain applicable pour différentes structures de corps humain ;
dans lequel l'interpolation, dans le résultat de détection de pose d'objet (20c), de points clés correspondant à l'au moins une partie d'objet manquante dans le résultat de détection de pose d'objet (20c) selon le résultat de détection de pose de partie (20e) et la pose de référence prédéfinie (20k, 30b) associée à l'objet (40c) pour obtenir la pose globale (40m) de l'objet (40c) comprend :
l'acquisition (S206) de la pose de référence prédéfinie (20k, 30b) associée à l'objet, et la détermination d'un premier nombre de points clés dans la pose de référence (20k, 30b) et d'un deuxième nombre de points clés dans le résultat de détection de pose d'objet (20c) ;
dans le cas où le premier nombre est supérieur au deuxième nombre, l'interpolation (S207), dans le résultat de détection de pose d'objet (20c), de points clés correspondant à l'au moins une partie d'objet manquante dans le résultat de détection de pose d'objet (20c) selon la pose de référence (20k, 30b) pour obtenir un premier résultat de détection de pose d'objet candidat ; et
l'interpolation (S208) de points clés dans le premier résultat de détection de pose d'objet candidat au niveau d'une partie d'objet correspondant à la première partie selon le résultat de détection de pose de partie (20e) pour obtenir la pose globale (40m) correspondant à l'objet ;
dans lequel l'interpolation de points clés dans le premier résultat de détection de pose d'objet candidat au niveau de la partie d'objet correspondant à la première partie selon le résultat de détection de pose de partie (20e) pour obtenir la pose globale (40m) correspondant à l'objet (40c) comprend l'un quelconque de i) et ii) :
i) dans le cas où le résultat de détection de pose d'objet (20c) contient une pose d'une deuxième partie mais ne contient pas une pose d'une troisième partie, la détermination d'une première direction de partie correspondant à la troisième partie selon des positions d'un deuxième ensemble de points clés de la première partie contenu dans le résultat de détection de pose de partie (20e), la deuxième partie et la troisième partie étant des parties symétriques de l'objet, et la deuxième partie et la troisième partie étant connectées avec la première partie ;
l'acquisition d'une première longueur de partie de la deuxième partie dans le premier résultat de détection de pose d'objet candidat, et la détermination de positions des points clés pour la troisième partie selon la première longueur de partie et la première direction de partie ; et
l'ajout des points clés pour la troisième partie au premier résultat de détection de pose d'objet candidat pour obtenir la pose globale (40m) correspondant à l'objet (40c) dans la trame d'image ; et
ii) dans lequel la trame d'image est une i-ième trame d'image dans des données vidéo, et i est un entier positif ;
dans le cas où le résultat de détection de pose d'objet (20c) ne contient pas de poses d'une deuxième partie et d'une troisième partie de l'objet, alors la détermination d'une deuxième direction de partie correspondant à la deuxième partie et d'une troisième direction de partie correspondant à la troisième partie selon le deuxième ensemble de points clés correspondant à la première partie contenu dans le résultat de détection de pose de partie (20e), la deuxième partie et la troisième partie étant des parties symétriques de l'objet, et la deuxième partie et la troisième partie étant connectées avec la première partie ;
l'acquisition, dans une j-ième trame d'image, d'une deuxième longueur de partie correspondant à la deuxième partie et d'une troisième longueur de partie correspondant à la troisième partie, et la détermination de points clés pour la deuxième partie selon la deuxième longueur de partie et la deuxième direction de partie, j étant un entier positif, et j étant inférieur à i ; et
la détermination des points clés pour la troisième partie selon la troisième longueur de partie et la troisième direction de partie, et l'ajout des points clés pour la deuxième partie et des points clés pour la troisième partie au premier résultat de détection de pose d'objet candidat pour obtenir la pose globale (40m) correspondant à l'objet (40c) dans la trame d'image.

2. Procédé selon la revendication 1, dans lequel l'acquisition du résultat de détection de pose d'objet (20c) de l'objet dans la trame d'image et du résultat de détection de pose de partie (20e) de la première partie de l'objet (40c) dans la trame d'image comprend :
l'entrée de la trame d'image dans un modèle de détection d'objet (20b), et l'acquisition du résultat de détection de pose d'objet (20c) par le modèle de détection d'objet (20b), dans lequel le résultat de détection de pose d'objet (20c) comprend un premier ensemble de points clés connectés correspondant à la pluralité de parties de l'objet ; et
l'entrée de la trame d'image dans un modèle de détection de partie (20d) qui est utilisé pour détecter la pose de la première partie, et l'acquisition du résultat de détection de pose de partie (20e) par le modèle de détection de partie (20d), dans lequel le résultat de détection de pose de partie (20e) comprend un deuxième ensemble de points clés connectés correspondant à la première partie de l'objet.

3. Procédé selon la revendication 2, dans lequel l'entrée de la trame d'image dans le modèle de détection d'objet (20b), et l'acquisition du résultat de détection de pose d'objet (20c) par le modèle de détection d'objet (20b) comprend :
l'entrée (S201) de la trame d'image dans le modèle de détection d'objet (20b), l'acquisition d'une caractéristique de pose d'objet de l'objet (40c) par le modèle de détection d'objet (20b), et la reconnaissance d'un premier résultat de classification (60d) de la caractéristique de pose d'objet par un classificateur du modèle de détection d'objet (20b), le premier résultat de classification (60d) représentant une catégorie de partie correspondant au premier ensemble de points clés ;
la génération (S202) d'une première carte d'activation (60e) selon le premier résultat de classification (60d) et des caractéristiques convolutionnelles d'objet délivrées par une dernière couche de convolution du modèle de détection d'objet (20b) ; et
l'acquisition (S203) d'une valeur moyenne de pixel de la première carte d'activation (60e), et la détermination d'une position de chaque point clé du premier ensemble de points clés selon la valeur moyenne de pixel ; et
la détermination (S203) du résultat de détection de pose d'objet (20c) selon la catégorie de partie et la position de chaque point clé du premier ensemble de points clés ;
dans lequel la caractéristique de pose d'objet est une caractéristique de fusion entre une caractéristique de description d'objet et une caractéristique de description de partie ; l'acquisition de la caractéristique de pose d'objet de l'objet par le modèle de détection d'objet (20b) comprend :
l'acquisition de la caractéristique de description d'objet (60c) correspondant à l'objet (40c) dans la trame d'image (60a) dans le modèle de détection d'objet (20b), et la délivrance d'un deuxième résultat de classification de la caractéristique de description d'objet (60c) par le classificateur dans le modèle de détection d'objet (20b) ;
l'acquisition des caractéristiques convolutionnelles d'objet délivrées par la dernière couche de convolution dans le modèle de détection d'objet (20b), et l'obtention d'une deuxième carte d'activation de la trame d'image sur la base du deuxième résultat de classification et des caractéristiques convolutionnelles d'objet ;
la division de la trame d'image (60a) en blocs selon la deuxième carte d'activation pour obtenir M blocs d'image de zone de partie (60f), et l'acquisition de caractéristiques de description de partie (60g) correspondant respectivement aux M blocs d'image de zone de partie (60f), M étant un entier positif ; et
la combinaison de la caractéristique de description d'objet (60c) et des caractéristiques de description de partie (60g) correspondant aux M blocs d'image de zone de partie (60f) pour obtenir la caractéristique de pose d'objet.

4. Procédé selon la revendication 2, dans lequel l'entrée de la trame d'image dans le modèle de détection de partie (20d), et l'acquisition du résultat de détection de pose de partie (20e) par le modèle de détection de partie (20d) comprend :
l'entrée (S204) de la trame d'image dans le modèle de détection de partie (20d), et la détection de l'existence de la première partie de l'objet (40c) dans la trame d'image ;
dans le cas où la première partie est détectée dans la trame d'image, l'acquisition (S205) d'une image de zone (80c, 80d) contenant la première partie à partir de la trame d'image, l'acquisition de positions du deuxième ensemble de points clés de la première partie selon l'image de zone (80c, 80d), et la détermination du résultat de détection de pose de partie (20e) correspondant à la trame d'image sur la base des positions du deuxième ensemble de points clés ; et
dans le cas où la première partie n'est pas détectée dans la trame d'image, la détermination que le résultat de détection de pose de partie (20e) correspondant à la trame d'image est nul.

5. Procédé selon la revendication 4, dans lequel l'acquisition de l'image de zone contenant la première partie à partir de la trame d'image, l'acquisition de positions du deuxième ensemble de points clés de la première partie selon l'image de zone, et la détermination du résultat de détection de pose de partie (20e) correspondant à la trame d'image sur la base des positions du deuxième ensemble de points clés comprend :
le découpage de la trame d'image pour obtenir l'image de zone contenant la première partie ;
l'acquisition d'une caractéristique de contour de la première partie, et la prédiction des positions du deuxième ensemble de points clés de la première partie selon la caractéristique de contour ; et
la connexion du deuxième ensemble de points clés de la première partie sur la base de leurs positions pour obtenir le résultat de détection de pose de partie (20e).

6. Procédé selon la revendication 1 avec l'option i), dans lequel l'ajout du point clé pour la troisième partie au premier résultat de détection de pose d'objet candidat pour obtenir la pose globale (40m) correspondant à l'objet dans la trame d'image comprend :
l'ajout du point clé pour la troisième partie au premier résultat de détection de pose d'objet candidat pour obtenir un deuxième résultat de détection de pose d'objet candidat (90b) correspondant à l'objet (40c) dans la trame d'image, et l'acquisition d'un décalage de pose entre la pose de référence (20k, 30b) et le deuxième résultat de détection de pose d'objet candidat (90b) ; et
dans le cas où le décalage de pose est supérieur à une valeur de seuil de décalage, l'exécution d'une correction de point clé sur le deuxième résultat de détection de pose d'objet candidat (90b) sur la base de la pose de référence (20k, 30b) pour obtenir la pose globale (90d) correspondant à l'objet (40c) dans la trame d'image.

7. Procédé selon la revendication 1, comprenant en outre :
la construction d'un objet virtuel associé à l'objet, et la commande de la pose de l'objet virtuel selon la pose globale (40m).

8. Procédé selon la revendication 1, comprenant en outre :
la création d'un objet virtuel selon la pose globale de l'objet, dans lequel l'objet virtuel a la même pose globale que l'objet ; et
l'affichage de l'objet virtuel dans une scène virtuelle d'une application multimédia.

9. Dispositif informatique, comprenant une mémoire et un processeur,
la mémoire étant connectée au processeur, la mémoire étant configurée pour stocker un programme informatique, et le processeur étant configuré pour invoquer le programme informatique, de sorte que le dispositif informatique exécute le procédé selon l'une quelconque des revendications 1 à 8.

10. Support de stockage lisible par ordinateur, dans lequel le support de stockage lisible par ordinateur stocke un programme informatique ; et le programme informatique est adapté pour être chargé et exécuté par un processeur, de sorte que le dispositif informatique ayant le processeur exécute le procédé selon l'une quelconque des revendications 1 à 8.

11. Produit de programme informatique, comprenant un programme informatique/des instructions, dans lequel le programme informatique/les instructions, lorsqu'il est/elles sont exécuté (es) par un processeur, met/mettent en œuvre le procédé selon l'une quelconque des revendications 1 à 8.
